(19) Europäisches Patentamt
European Patent Office
Office européen des brevets

(11) EP 3 522 322 B1

(12) EUROPEAN PATENT SPECIFICATION

(45) Date of publication and mention
of the grant of the patent:
17.02.2021 Bulletin 2021/07

(51) Int Cl.:
H02J 3/38 (2006.01)          G06Q 10/04 (2012.01)
G06Q 50/06 (2012.01)         H02J 3/24 (2006.01)

(21) Application number: 17855380.6

(22) Date of filing: 20.07.2017

(86) International application number:
PCT/JP2017/026237

(87) International publication number:
WO 2018/061422 (05.04.2018 Gazette 2018/14)

(54) **POWER SYSTEM AGGREGATION DEVICE AND METHOD, AND POWER SYSTEM STABILIZATION DEVICE**

AGGREGATIONSVORRICHTUNG UND -VERFAHREN FÜR STROMVERSORGUNGSSYSTEM SOWIE STABILISIERUNGSVORRICHTUNG FÜR STROMVERSORGUNGSSYSTEM

DISPOSITIF ET PROCÉDÉ D'AGRÉGATION DE SYSTÈME D'ALIMENTATION, ET DISPOSITIF DE STABILISATION DE SYSTÈME D'ALIMENTATION

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR

(30) Priority: 28.09.2016 JP 2016188993

(43) Date of publication of application:
07.08.2019 Bulletin 2019/32

(73) Proprietor: Hitachi, Ltd.
Tokyo 100-8280 (JP)

(72) Inventors:
• TSUBOTA, Akira
Tokyo 100-8280 (JP)
• TSUCHIYA, Kazutoshi
Tokyo 100-8280 (JP)
• TOBE, Sumito
Tokyo 100-8280 (JP)
• YATSU, Masahiro
Tokyo 100-8280 (JP)

(74) Representative: MERH-IP Matias Erny Reichl
Hoffmann
Patentanwälte PartG mbB
Paul-Heyse-Strasse 29
80336 München (DE)

(56) References cited:
JP-A- H1 056 735          JP-A- H1 056 735
JP-A- H02 276 423         JP-A- 2012 170 168
JP-A- 2016 036 252        US-A1- 2015 025 698

**Description**

Technical Field

The present invention relates to a power system aggregation device and a method, and a power system stabilization device for creating an aggregation system model in which a part of a system is simplified in a power system model.

Background Art

In a stability monitoring system and a stabilization control system of a power system, analysis is performed by using a power system model online or offline. Due to the expansion of power facilities and strengthening of interconnection between power systems, the power system model has become large and complicated. Along with this, the calculation amount of the stability analysis using the power system model has increased, and the calculation time also continues to increase.

Due to the increase in the calculation amount, there are problems such as delay in calculation processing and cost increase of the calculation facilities. Particularly in online systems, short-term analysis is required to prepare for instability of the power system within a short time.

In order to reduce the calculation amount of stability analysis, there is a method of using an aggregation system model in which a part of the power system model is simplified. Since the response of the simplified portion of the aggregation system model is different from the response of the original detailed system model (error occurs), the analysis results of the aggregation system model and the detailed system model are different.

The error and the calculation amount of the aggregation system model will change depending on the aggregation area and degree, but the larger the portion to be simplified is, the smaller the calculation amount is, and the larger the error becomes. Therefore, reducing the calculation amount while maintaining the analysis accuracy is a challenge of creating an aggregation system model. As inventions for creating an aggregation system model, there are JP-A-H10-56735 (PTL 1), JP-A-2004-242452 (PTL 2) and US 2015/002568 A1 (PTL 3). The creation process of an aggregation system model may be categorized into three processes, in order, aggregation group creation as pre-processing, aggregation, parameter adjustment as post-processing.

Aggregation is a process of replacing a set of generators and buses, which are a part of the detailed system model, with a simple model. In Japan, a method of matching the short-circuit capacity of a detailed system model and an aggregation system model, such as a dual load method is common.

Aggregation group creation is a process of creating a combination (aggregation group) of generators, buses, and the like to be aggregated from the generators and buses, and the like of the detailed system model. Also, the aggregation group is limited by an aggregation method. For example, in the dual load method, it is necessary to connect with a system in which an aggregation group is not aggregated at one point.

Parameter adjustment is a process of adjusting parameters of aggregated generators or the like in order to improve the accuracy of analysis using the aggregation system model.

In the process of creating an aggregation system model, it is difficult to examine all of the huge combinations to obtain an optimum combination in the aggregation group creation process. In addition, since simulation is used for the evaluation of the analysis accuracy and the calculation amount of the aggregation system model, it is a time-consuming process . Therefore, there is a problem that the work of creating an optimum aggregation group becomes a long-term work involving a sort of human-made trial and error.

PTL 1 and PTL 2 relate to inventions which solve this problem and efficiently create an aggregation group which is an aggregation model with less calculation amount and high analysis accuracy.

In PTL 1, fluctuations of generators during an accident are calculated in a detailed system model and an aggregation group is created based on the similarity of the fluctuations. A user creates a target aggregation group by setting a constraint condition of analysis accuracy and changing a similarity threshold until the constraint condition is satisfied.

In PTL 2, importance is given to all nodes according to the degree of influence on the analysis result using the detailed system model and an aggregation group is created based on the importance. A user sets a constraint condition of analysis accuracy and creates an aggregation group satisfying the constraint condition by dividing the nodes into other aggregation groups in descending order of importance until the constraint condition is satisfied. In PTL 3 a demand response automated load characterization systems and methods are described. One method includes identifying a plurality of laod modesl that include a variable that influences an energy demand, normalizing the plurality of load models, aggregating the normalized plurality of load models to generate an aggregated model for the variable.

Citation List

Patent Literature

PTL 1: JP-A-H10-56735
PTL 2: JP-A-2004-242452
PTL 3: US 2015/025698 A1

Summary of Invention

Technical Problem

In recent years, the amount of renewable energy to be introduced has increased, a power system has become complicated, and the calculation amount of the power system analysis has been increasing more than before. Therefore, restrictions on the execution speed and the analysis accuracy of a monitoring system and a stabilization system become severe, and an aggregation system model with less calculation amount and a smaller analysis error is required as compared with the system of related art.

On the contrary, in the aggregation system models created in PTL 1 and PTL 2, an excessive number of aggregation groups are created, and the calculation amount may not be sufficiently reduced in some cases. In the invention of PTL 1, since the similarity is determined at the same threshold for the fluctuations of all generators, generators that do not affect the simulation results of the main system but have different fluctuations become different aggregation groups, and the number of aggregation groups increases. In PTL 2, even for a plurality of generators that are exactly the same model and do not affect simulation results even if the generators are aggregated as the same aggregation group, when an aggregation group is created based on the importance of nodes, if each generator's importance is high, the generator becomes a different aggregation group and the number of aggregation groups increases.

Solution to Problem

The above problem is solved by the subject matter of the appended independent claims.

Advantageous Effects of Invention

According to the present invention, it is possible to create an aggregation group which is an aggregation system model with higher analysis accuracy and less calculation amount than before.

Brief Description of Drawings

[Fig. 1] Fig. is a diagram showing an example of a functional configuration of a power system aggregation device according to an embodiment of the present invention.
[Fig. 2] Fig. 2 is a diagram showing an example of a process of executing aggregation fitness evaluation in the power system aggregation device of Fig. 1.
[Fig. 3] Fig. 3 is a diagram showing an example of a process of executing group creation in the power system aggregation device of Fig. 1.
[Fig. 4] Fig. 4 is a diagram showing an example of a process of executing aggregation system model creation in the power system aggregation device of Fig. 1.
[Fig. 5] Fig. 5 is a diagram showing an example of a process of executing model evaluation in the power system aggregation device of Fig. 1.
[Fig. 6] Fig. 6 is a diagram showing a power system model before and after application of a dual load method in creating an aggregation system model of the power system aggregation system of Fig. 1.
[Fig. 7] Fig. 7 is a diagram showing an example of an aggregation log in the power system aggregation device of Fig. 1.
[Fig. 8] Fig. 8 is a diagram for describing an effect of the power system aggregation device of Fig. 1.
[Fig. 9] Fig. 9 is a diagram showing an example of a functional configuration of a power system aggregation device according to another Embodiment 2 of the present invention.
[Fig. 10] Fig. 10 is a diagram showing an example of a process of executing aggregation fitness evaluation in the power system aggregation device of Fig. 9.

[Fig. 11] Fig. 11 is a diagram showing an example of a process of executing group creation in the power system aggregation device of Fig. 9.

[Fig. 12] Fig. 12 is a diagram showing an example of a process of executing model evaluation in the power system aggregation device of Fig. 9.

[Fig. 13] Fig. 13 is a diagram showing an example of a process of executing aggregation fitness evaluation parameter change in the power system aggregation device of Fig. 9.

[Fig. 14] Fig. 14 is a diagram showing an example of a process of executing combined threshold change in the power system aggregation device of Fig. 9.

[Fig. 15] Fig. 15 is a diagram showing an example of a functional configuration of a power system control system according to another Embodiment 3 of the present invention.

[Fig. 16] Fig. 16 is a diagram showing an example of a functional configuration of the power system aggregation device in the power system control system of Fig. 15.

Description of Embodiments

Hereinafter, embodiments will be described with reference to drawings.

Example 1

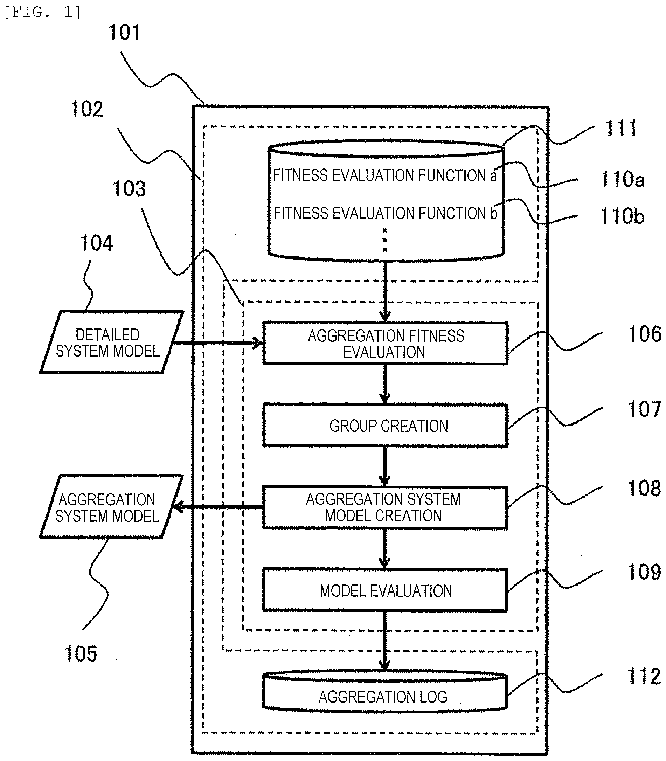

An embodiment of the present invention will be described with reference to Figs. 1 to 8.

Fig. 1 is a diagram showing a functional configuration of a power system aggregation device to which the present invention is applied. A power system aggregation device 101 according to the embodiment is configured by a storage device 102 and a processing device 103 and outputs aggregation system model data 105 with detailed system model data 104 as an input.

The processing device 103 is configured by aggregation fitness evaluation 106, aggregation group creation 107, aggregation system model creation 108, and model evaluation 109. The storage device 102 stores a fitness evaluation function library 111 including a plurality of fitness evaluation functions 110a, 110b,..., and an aggregation log 112. The storage device 102 is, for example, a hard disk drive (HDD), a memory, or the like.

The processing flow of the power system aggregation device 101 will be described with reference to Fig. 1. First, in the aggregation fitness evaluation 106, the detailed system model data 104 is read and an aggregation fitness is calculated by using the fitness evaluation function library 111. Next, in the group creation 107, an aggregation group is created by using the aggregation fitness. The aggregation group is an area to be aggregated from a detailed system model. Next, in the aggregation system model creation 108, the aggregation system model data 105 is created by using the detailed system model data 104 and the aggregation group. Finally, in the model evaluation 109, the analysis accuracy and the calculation amount of the aggregation system model are evaluated by using the detailed system model data 104 and the aggregation system model data 105 and are output to the aggregation log 112.

Each data, details and specific examples of each process will be described below.

The detailed system model data 104 is data of a detailed system model to be aggregated. The data of the system model is information on voltages of buses, the output of generators and loads, a tidal current flowing through a transmission line, a connection relationship of a transmission line and a transformer, constants such as the impedance of the transmission line and the transformer, constants of the generators and the control equipment thereof, operation and suspension of facilities, and the like. The data may be stored in the storage device 102 or may be read from another device. Further, in a case where the output of the generators and loads is different or in a case where the state of operation and suspension of the facilities is different, detailed system model data of a plurality of states may be present, for example.

The aggregation system model data 105 is data of a aggregation system model created by the power system aggregation device 101 and may be stored in the storage device 102 or may be transmitted to another device.

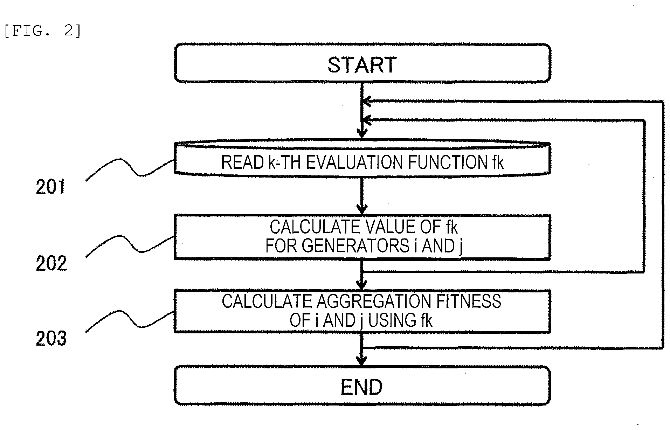

Details of the process of the aggregation fitness evaluation 106 will be described with reference to the flowchart of Fig. 2. Here, the aggregation fitness is an index representing the ease of aggregation of a plurality of constituent elements of the power system model. The constituent element of the power system model is at least one of a generator, a load, a bus, a transmission line, a transformer, phase modifying equipment, and a protection relay. Here, the aggregation fitness is calculated for two generators.

In a process 201, a plurality of fitness evaluation functions are read from the fitness evaluation function library 111. In a first embodiment, two functions f1 and f2 are read as fitness evaluation functions. f1 is a function f1(i, j) for a generator i and a generator j, and f2 is a function f2 (i) for each generator. Specific functions will be described later.

In a process 202, the values of the fitness evaluation functions read are calculated for the two generators i and j .

In a process 203, as shown in Equation 1, an aggregation fitness F(i, j) of the generator i and the generator j is calculated with a linear sum by f1(i, j), f2(i), f2(j) and weight parameters w1 and w2 from the output of the fitness evaluation functions.

[Equation 1]

$$F(i,j) = w1 \cdot f1(i,j) + w2 \cdot (f2(i) + f2(j))$$

The processes 201, 202, and 203 are repeated until the aggregation fitness is calculated for all combinations of the generators to be aggregated. As another embodiment, the aggregation fitness may be determined for buses or loads, and the aggregation fitness may be determined for combinations of the constituent elements of three or more power system models. Three or more fitness evaluation functions may be used.

The fitness evaluation function library 111 stores at least two or more fitness evaluation functions. Here, the fitness evaluation function is a function for outputting a value with the constituent elements of one or more power system models as inputs. In the first embodiment, it is assumed that the function f1(i, j) about the coherency of the generator i and the generator j, and the function f2 (i) about the electrical distance of each of the generators i and j from the main system are fitness evaluation functions.

f1(i, j) is a function for coherency indicating the degree of similarity of two fluctuations. Here, a coherency C(i, j) of the phase difference angle fluctuations of the generators i and j is calculated by (Equation 2).

[Equation 2]

$$C(i,j) = \frac{1}{b-a} \int_{t=a}^{t=b} \left| \Delta\delta_j(t) - \Delta\delta_i(t) \right| dt$$

In Equation 2, a and b are the times of fluctuation, and $\Delta\delta i(t)$ and $\Delta\delta j(t)$ are deviations from the initial values of the phase difference angle of the generator i and the generator j, respectively. C(i, j) takes a smaller value as the two fluctuations resemble each other and is 0 when the two fluctuations completely match. The fitness evaluation function f1 using coherency is obtained by Equation 3. In the aggregation, a combination with similar fluctuations tends not to change the analysis accuracy even when being aggregated, and the larger the value of f1 is, the higher aggregation fitness between the generators i and j is.

[Equation 3]

$$f1(i,j) = e^{-C(i,j)}$$

The electrical distance is an index determined by the extent to which the variation of the voltage at a certain point varies the current or voltage at another point, and there is a calculation method such as reactance and the number of nodes. In the aggregation, the power system is divided into the main system that is desired to be examined well in the analysis and others. Even though portions electrically far from the main system are greatly aggregated and the properties thereof are changed, the influence on the main system is small and the analysis result hardly changes, and therefore the aggregation fitness is high. Here, the electrical distance between a bus A of the main system and a bus B whose aggregation fitness is to be measured is calculated as follows.

First, all buses are divided into the bus A, the bus B, and other buses, and a relational expression of the voltage and current of the buses are prepared from the Kirchhoff's law, and the like as shown in Equation 4. It is assumed that an imaginary portion XAB of the ratio (Equation 5) of the voltage of the bus A and the current of the bus B is the electrical distance between the bus A and the bus B when the voltage of the bus B is 0 and the currents other than the bus A and the bus B are 0. The distance between a specific bus of the main system and a bus at the connection end of a generator is calculated as an electrical distance of the generator. In the case of calculating the electrical distance from a plurality of buses of the main system, the electrical distances between each bus and generator are calculated and the harmonic mean thereof is obtained. Using a distance X between the main system and the generator, the fitness evaluation function f2 is obtained as shown in Equation 6. f2 takes a value from -1 to 0 and becomes a value close to 0 as the electrical distance between the main system and a generator becomes greater.

[Equation 4]

$$\begin{bmatrix} I_A \\ I_B \\ 0 \end{bmatrix} = \begin{bmatrix} Y_{AA} & Y_{AB} & Y_{AO} \\ Y_{BA} & Y_{BB} & Y_{BO} \\ Y_{OA} & Y_{OB} & Y_{OO} \end{bmatrix} \begin{bmatrix} V_A \\ 0 \\ V_O \end{bmatrix}$$

[Equation 5]

$$R_{AB} + jX_{AB} = 1 \Big/ \left( Y_{BA} - Y_{BP} Y_{OO}^{-1} Y_{OA} \right)$$

[Equation 6]

$$f2 = -e^{-X}$$

As another embodiment of the fitness evaluation function, different functions may be used depending on the purpose of analysis such as sensitivity of the voltage of the bus connected to a generator having an effect on the tidal current variations of other transmission lines, short-circuit capacity of the generator, and the like.

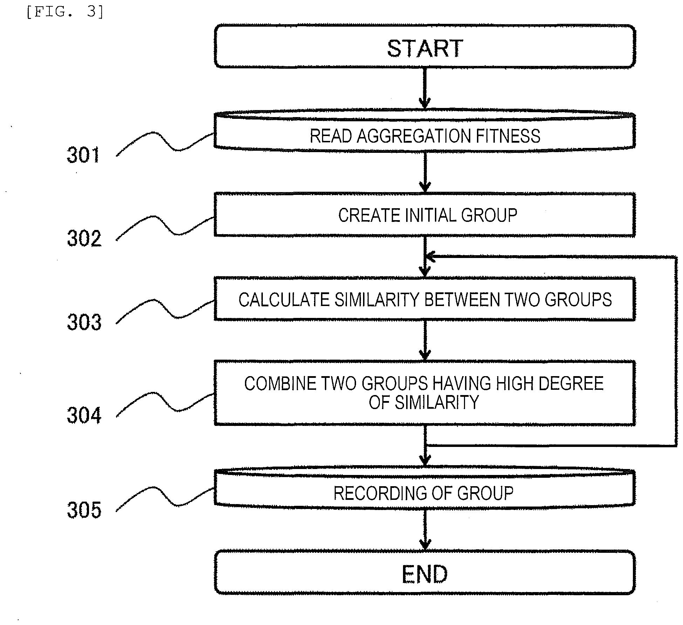

Details of the process of the group creation 107 will be described with reference to the flowchart of Fig. 3. In the group creation 107, an aggregation group of the generators is created based on the aggregation fitness of the two generators calculated in the aggregation fitness evaluation 106.

In a process 301, the aggregation fitness calculated by the aggregation fitness evaluation 106 is read. In a process 302, an initial group including only one generator is created. In a process 303, the similarity between two groups is calculated. The similarity represents the degree of ease of aggregation of two groups, and is, for example, the minimum aggregation fitness among the combinations of one generator selected from each group. A process 304 is a process of combining two groups having high similarity. Here, the meaning of the similarity being high is that the similarity of the groups exceeds a combined threshold defined by the user and is the maximum among the similarities of two groups. The processes 303 and 304 are repeated until there is no group having a similarity greater than the combined threshold. In a process 305, the created group is stored. As another unclaimed example of the group creation process 107, the similarity of two groups may be another definition such as the maximum aggregation fitness, and a group may be created by a method such as hierarchical clustering, k-means, or the like.

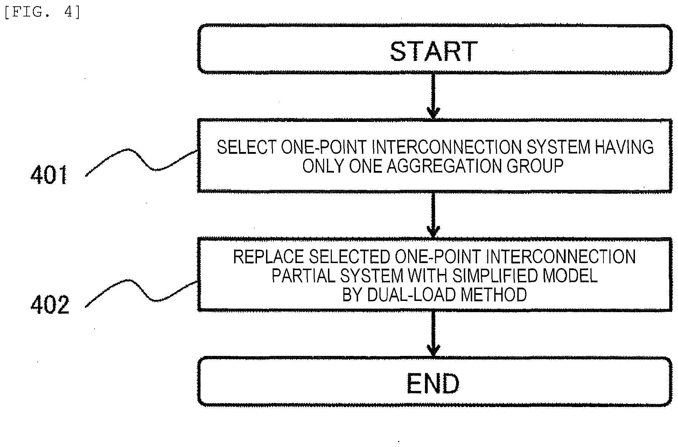

Details of the process of the aggregation system model creation 108 will be described with reference to the flowchart of Fig. 4. In the aggregation system model creation 108, based on the aggregation group created in the group creation process 107, the detailed system model is aggregated and the aggregation system model data 105 is created. The aggregation is performed by the dual load method based on the aggregation groups of the generators . In the dual load method, the portion to be aggregated must be connected with other systems at one point. A portion of such a power system that is interconnected with another power system at one point is set as a one-point interconnected partial system.

In a process 401, a one-point interconnected partial system having a generator of only one aggregation group is selected. First, a one-point interconnected partial system is selected from the one-point interconnected partial systems included in the detailed system model. Next, groups of generators included in the partial system are examined, and when belonging to one aggregation group, all the generators are set as a one-point interconnected partial system to which the dual load method is to be applied. When there are two or more groups to which a generator belongs, it is assumed that the dual load method cannot be applied and the process shifts to another one-point interconnected partial system.

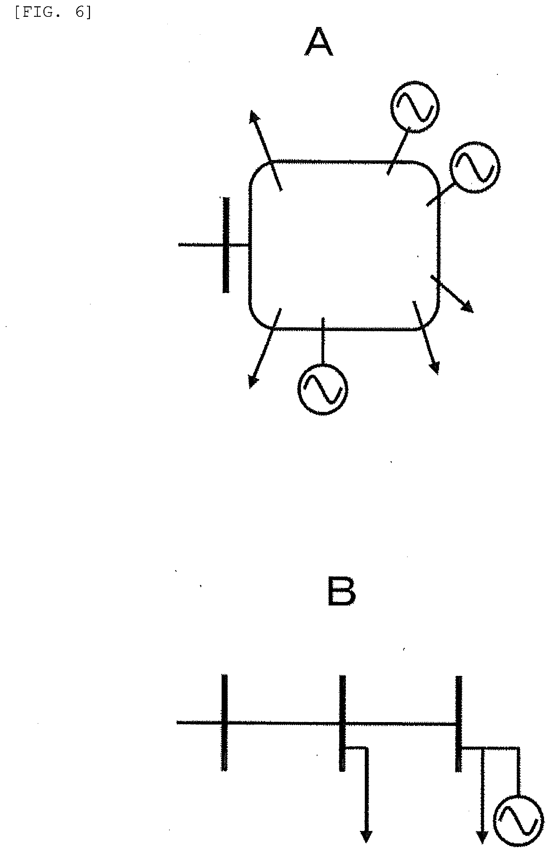

In a process 402, the one-point interconnected partial system selected in the process 401 is aggregated by the dual load method. The dual load method is a process of replacing a one-point interconnected partial system as shown in Fig. 6A with a system model of one generator and two loads shown in Fig. 6B. PTL 1 describes a method of calculating constants and variables of a generator, a load, and a branch.

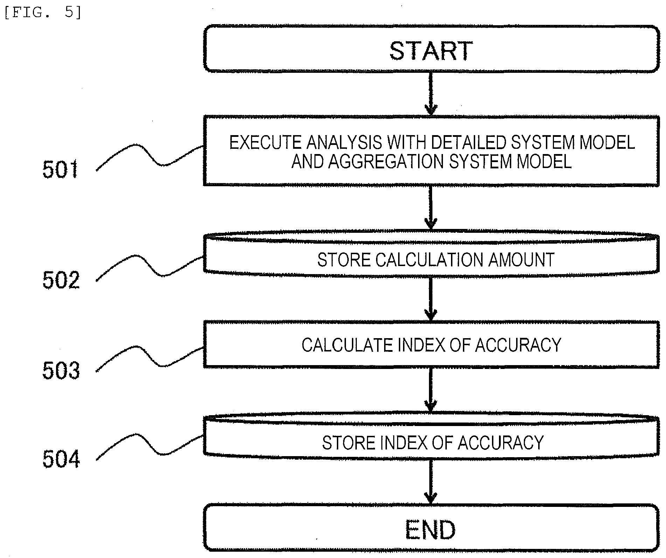

Details of the process of the model evaluation 109 will be described with reference to the flowchart of Fig. 5. In the model evaluation 109, the analysis accuracy and calculation amount of the aggregation system model are evaluated by using the detailed system model and the aggregation system model. In the first embodiment, the aggregation system model is evaluated by the phase difference angle fluctuation and the calculation time of the generators during a fault.

In a process 501, parameters to be used in the evaluation are obtained by analysis such as fault calculation and the like. In the first embodiment, fluctuations during a fault of the detailed system model and the aggregation system model are calculated.

In a process 502, the calculation amount of the aggregation system model is stored in the aggregation log 112. The calculation time of the process 501 is set as an calculation amount. Alternatively, the number of buses of the aggregation system model or the number of generators may be used as an calculation amount.

In a process 503, the parameters of the detailed system model and the aggregation system model calculated in the process 501 are compared and the analysis accuracy is calculated. For example, the phase difference angle fluctuation deviation for each generator between the detailed system model and the aggregation system model is calculated, and the maximum deviation and the root mean square thereof are set as accuracy. The root mean square of the deviation is calculated by Equation 7.

[Equation 7]

$$\frac{1}{b-a}\sqrt{\int_a^b \left(\delta_{reduced}(i,t) - \delta_{detailed}(i,t)\right)^2 dt}$$

In Equation 7, a and b are times, $\delta_{reduced}(i, t)$ is the phase difference angle fluctuation of the generator i of the aggregation system model, and $\delta_{detailed}(i, t)$ is the phase difference angle fluctuation of the generator i of the detailed system model.

In a process 504, the calculation result of the process 503 is stored in the aggregation log 112. As another embodiment of the model evaluation 109, instead of the phase difference angle fluctuation of the generator i in the process 504 of the detailed system model, fluctuation data of the generator i measured by an actual power system may be used, or instead of the phase difference angle fluctuation of the generator, a different parameter such as a voltage variation during an accident or sensitivity of a tidal current variation to the voltage variation may be used as an index of accuracy depending on the analysis purpose.

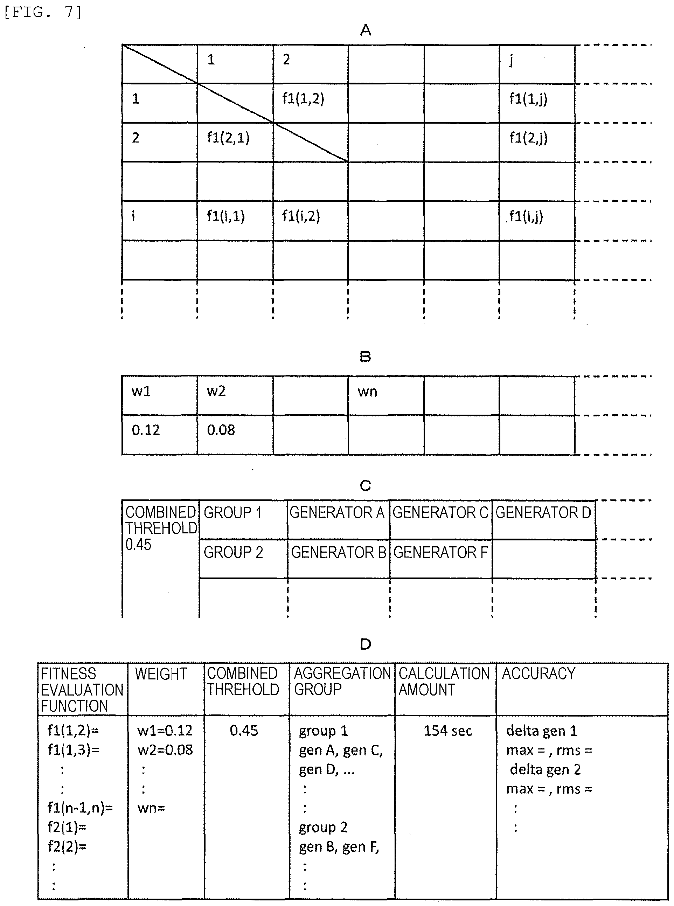

The stored data of the aggregation log 112 will be described. The aggregation log 112 stores the output of the fitness evaluation functions to be calculated by the aggregation fitness evaluation 106, the aggregation fitness, the groups to be created by the group creation 107, the calculation amount of the aggregation system model to be calculated by the model evaluation 108, and the analysis accuracy. Specifically, the aggregation log 112 stores calculation results of the fitness functions f1 and f2, calculation parameters w1 and w2 of the aggregation fitness, an aggregation fitness of the two generators, a combined threshold of the group creation 107, and groups of generators, calculation time of the fluctuations during a fault of the aggregation system model, and the maximum value and root mean square of the phase difference angle fluctuation deviation of the generators of the detailed system model and the aggregation system model. Fig. 7 shows a display example of data. Fig. 7A is a display example of the output of the fitness evaluation function f1. It is assumed that the value f1(i, j) for the generator i and the generator j is the element on a row i and a column j of the two-dimensional matrix. Fig. 7B is a display example of the evaluation parameters of the aggregation fitness evaluation, and as shown in Equation 1, when calculating an aggregation fitness with the linear sum of fitness functions, the weight parameters w1, w2, ... are displayed as shown in Fig. 7B. The elements of the first row and n columns are parameter names, and the elements of the second row and n columns are the values of the parameters of the first row and n columns. Fig. 7C is a display example of groups of generators. The first column shows a combined threshold of group creation. The elements of the row i and the second column indicate an i-th group, and the generators included in the group continue from the third column on the row i. Without displaying the elements individually as shown in Figs. 7A, 7B, and 7C, all may be tabulated collectively and displayed as shown in Fig. 7D.

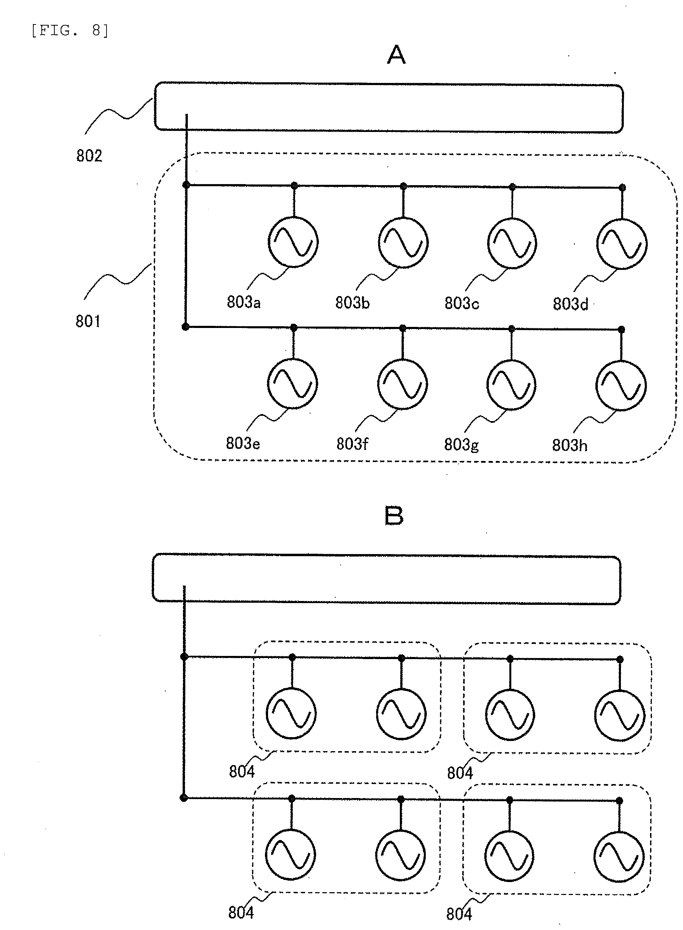

The above is the basic configuration of the power system aggregation device. Effects obtained by this embodiment will be described with reference to Fig. 8. An area 801 in Fig. 8A is a part of the system to be aggregated, and an area 802 is the main system. In this case, the area made up of the generators of 801 is aggregated. Generators 803a, 803b, 803c, and 803d are electrically close to the main system and have a large influence on the analysis result of the main system. On the other hand, generators 803e, 803f, 803g, and 803h are electrically far from the main system and have a small influence on the analysis result of the main system.

If an aggregation group of generators is created from 801 based on the coherency of the phase difference angle fluctuations during a certain fault, it is assumed that sets of 804 shown in Fig. 8B are obtained. A set of generators 803e and 803f and a set of generators 803g and 803h should be aggregated far from the main system, but because the generators do not have coherency, the generators are aggregated as separate groups. Therefore, the amount of calculation is greater than when the generators 803e, 803f, 803g, 803h are aggregated as one group.

If w1 of Equation 1 is positive and w2 is negative, in spite of the small coherency, the aggregation fitness increases as the electrical distance is long, and the generators 803e, 803f, 803g, and 803h that do not have coherency may be aggregated to the same group.

In addition, as another effect, it is possible for the user to, according to the aggregation log, determine whether the aggregation system model data 105 to be output by the device 101 is appropriate and modify the aggregation system model data 105. Aggregation of the power system requires modification of the aggregation groups in accordance with the starting and stopping of facilities and the change in the demand patterns of consumers.

First, the user determines from the aggregation log 112 whether the accuracy of the aggregation system model is low and whether it is necessary to modify the aggregation groups. Alternatively, from the calculation amount of the aggregation log, it is determined whether the effect of reduction in the calculation amount by aggregation is insufficient and it is necessary to modify the aggregation groups. When users determine that it is necessary to modify, the user modifies the aggregation groups by adjusting the weighting parameters w1 and w2 of Equation 1, which are the evaluation parameters of the aggregation fitness evaluation 106, or the combined threshold of the group creation 107.

Example 2

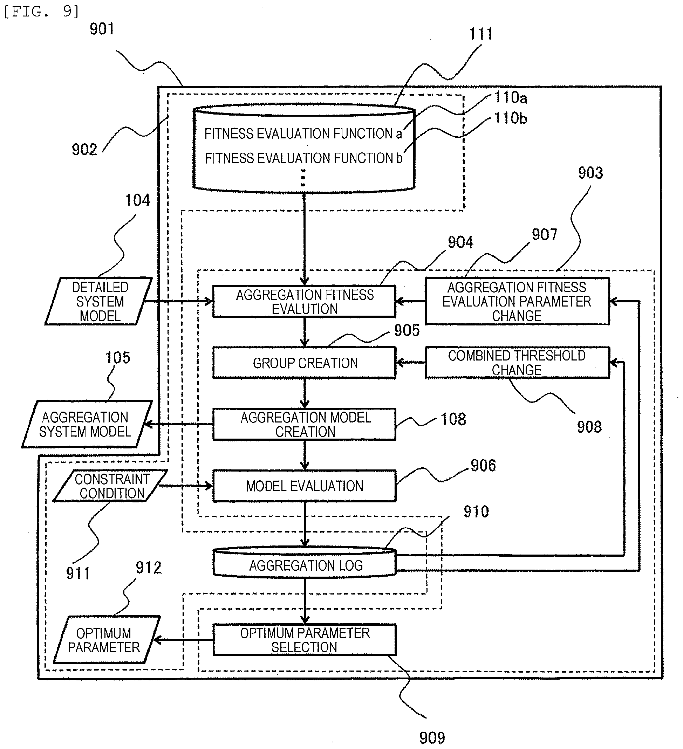

Another embodiment of the present invention will be described with reference to Figs. 9 to 14.

This embodiment is an aggregation system creation system that has a function of modifying parameters to create an aggregation group based on the aggregation log, creates an optimum aggregation system model that satisfies a constraint condition set by the user and outputs the condition as an optimum parameter, in addition to the functions of the device shown in the first embodiment.

Fig. 9 is a diagram showing the functional configuration of an aggregation system creation device 901 according to the embodiment. The power system aggregation device 901 is configured by a storage device 902 and a processing device 903 and outputs the aggregation system model data 105 with the detailed system model data 104 as an input. The processing device 903 is configured by aggregation fitness evaluation 904, group creation 905, aggregation system model creation 108, model evaluation 906, aggregation fitness evaluation parameter change 907, group creation threshold change 908, and optimum parameter selection 909. The storage device 902 stores the fitness evaluation function library 111 including a plurality of fitness evaluation functions 110a, 110b,..., an aggregation log 910, a constraint condition 911, and optimum parameters 912. The detailed system model data 104, the aggregation system model data 105, the fitness evaluation function library 111, the fitness evaluation function 110, the aggregation model creation 108 are the same as in the first embodiment, and description thereof is omitted.

The process flow of the power system aggregation device will be described with reference to Fig. 9. First, in the aggregation fitness evaluation 904, the aggregation fitness evaluation parameters of the detailed system model data 104 and the aggregation fitness evaluation parameter change 907 are read, and an aggregation fitness is calculated by using the fitness evaluation function library 111. Next, in the group creation 905, the combined threshold of the combined threshold change 908 is read and an aggregation group is created by using the aggregation fitness. The aggregation system model creation 108 is the same as in the first embodiment, and the aggregation system model data 105 is created by using the aggregation group. In the model evaluation 906, the accuracy and the calculation amount of the aggregation system model are evaluated by using the detailed system model data 104 and the aggregation system model data 105, and it is determined whether the constraint condition 911 is satisfied and the result is output to the aggregation log 910. The aggregation fitness evaluation parameter change 907 sets aggregation fitness evaluation parameters based on the aggregation log and sends the aggregation fitness evaluation parameters to the aggregation fitness evaluation 904. Similarly, the combined threshold change 908 sets a combined threshold used for the group creation 905 based on the aggregation log and sends the combined threshold to the group creation 905. The optimum parameter selection 909 compares the evaluations of the aggregation system model of the aggregation log 910, selects optimum aggregation fitness parameters and a combined threshold for creating the best aggregation system model for the user, and outputs the optimum aggregation fitness parameters and the combined threshold as the optimum parameters 912. Processes 903 to 908 and the process 108 are repetitive processes. At least one of the model evaluation 906, the aggregation fitness evaluation parameter change 907, and the combined threshold change 908 determines the termination of repetition.

Each data, details of each process, and specific examples will be described below.

The constraint condition 911 is constraint data that should be satisfied by the user-specified aggregation system model data 105. The constraints are, for example, the calculation time of the fluctuations during a fault when using the aggregation system model and the maximum deviation of bus voltage fluctuations of the detailed system model and the aggregation system model. The constraint condition data 911 is stored in the storage device 902.

The optimum parameters 912 are a combination of the combinations of the aggregation fitness evaluation parameters and the combined threshold that are used in the aggregation fitness evaluation 904 and the group creation 905, which is a combination with the highest evaluation satisfying the constraint condition 911, and are stored in the storage device 902.

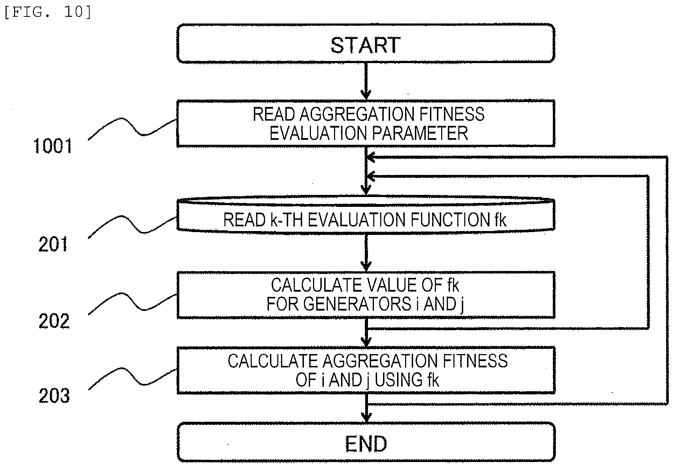

Details of the process of the aggregation fitness evaluation 904 will be described with reference to the flowchart of Fig. 10. The processes 201, 202, and 203 in Fig. 10 are the same as the processes 201, 202, and 203 in Fig. 2, and description thereof is omitted. In a process 1001, a parameter W: w1, w2,... sent by the aggregation fitness evaluation parameter change 907 is reset.

In the power system aggregation device 901 according to a second embodiment, as an example of fitness valuation functions different from those of the power system aggregation device 101 according to the first embodiment, a coherency $f4(i, j)$ of the two generators, an electrical distance $f5(i, j)$ of the two generators, a contribution ratio $f6(i)$ to the fluctuation of a generator by singular value decomposition, and a user-specified combination $f7(i, j)$ are used.

The fitness evaluation function $f4(i, j)$ calculates the coherency of a generator without using fluctuation waveforms. The generator such as a voltage source with constant magnitude and phase $\delta$, is connected to the power system via transient reactance, and the time variation of $\delta$ is expressed by Equation 8. If only the generator model has dynamic characteristics in the power system model, the fluctuations of n generators of the power system may be expressed by the matrix of Equation 9. Since the row i and the column j of this matrix A shows the influence of the fluctuation of the generator i from a j-th generator, the generators with similar coefficients of the row i and a row j fluctuate closely together. Therefore, it is assumed that the coherency $C(i, j)$ of the generator i and the generator j, which is obtained by Equation 10, is the fitness evaluation function $f4(i, j)$ of i and j. M is the inertial constant of a generator, and $\Delta T$ is the difference between the mechanical input torque to the generator and the electrical output torque. $\delta i$ is the phase of the voltage inside the generator i. $a \cdot b$ is an inner product of vectors. $|a|$ indicates the magnitude of the vector. Calculating the coherency by this method can eliminate the need to calculate the fluctuation waveforms and reduce the analysis time.

[Equation 8]

$$M \frac{d^2}{dt^2} \delta = \Delta T$$

[Equation 9]

$$\frac{d^2}{dt^2} \begin{bmatrix} \delta_1 \\ \vdots \\ \delta_n \end{bmatrix} = A \begin{bmatrix} \delta_1 \\ \vdots \\ \delta_n \end{bmatrix}$$

[Equation 10]

$$f4(i,j) = \frac{A(i) \cdot A(j)}{|A(i)||A(j)|}$$

It is assumed that the fitness evaluation function f5 (i, j) is the electrical distance between the generator i and the generator j. Generally, as the two generators are closer, the fluctuation of the generators tends to resemble, and the smaller the electrical distance of the two generators, the higher the aggregation fitness. The electrical distance between the generators i and j is calculated with A and B in Equations 4 and 5 as buses connected by the generator i and the generator j. It is assumed that reactance of Equation 5 is the fitness evaluation function f5(i, j).

It is assumed that fitness evaluation function f6(i) is the ratio (contribution ratio) contributing to the fluctuation of the power system of a generator by singular value decomposition. The contribution ratio in the singular value decomposition represents the degree of influence of a certain generator on a certain damped vibration when the fluctuation of the power system is expressed by the sum of damped vibrations of a single frequency. In the aggregation, aggregating the generators with a high contribution ratio for an important vibration such as a low damping factor and the like reduces analysis accuracy, and therefore the aggregation fitness is reduced.

The contribution ratio and the fitness evaluation function f6 are calculated as follows. The differential equation of the system is linearized and expressed into the form of Equation 11. This is decomposed by singular value decomposition into the form of Equation 12. Here, $\wedge$ is a diagonal matrix, and diagonal elements give the damping coefficient and frequency of the fluctuation of the power system model. A contribution ratio p (k, l) of a l-th variable in a k-th damped vibration is given by the element of a row k and a column 1 of a UA matrix as shown in Equation 13. The fitness evaluation function f6(i) is calculated by using the contribution ratio as follows. It is assumed that k is a state variable for the generator i. It is assumed that "l" is a row corresponding to the vibration for calculating the contribution ratio. The "l" takes the vibration with the weakest damping, the vibration closest to a user-specified frequency, or the like. The fitness evaluation function is defined by Equation 14. The numerator of the generator i is the sum of the contribution ratios on a vibration l, and the denominator is the sum of the contribution ratios of all functions to the vibration l. The greater the f6(i) is, the lower the aggregation fitness of the generator i is.

[Equation 11]

$$\frac{d}{dt}x = Ax$$

[Equation 12]

$$A = U\Lambda V$$

[Equation 13]

$$p(k,l) = U\Lambda(k,l)$$

[Equation 14]

$$f6(i) = \frac{\sum_{k} p(k,l)}{\sum_{k',l} p(k',l)}$$

The fitness evaluation function f7(i, j) is a function for aggregating or not aggregating combinations of user-specified generators. Due to user's knowledge and restrictions on operation, it is sometimes necessary to specify combinations of generators to be aggregated or to specify combinations of generators that should not be aggregated. By defining a function that takes a fixed value under a specific argument, such a condition can be determined. f7 in Equation 15 is a fitness evaluation function for specifying a generator G1 and a generator G2.

[Equation 15]

$$f7(i,j) = \begin{cases} 1 & (i,j) = (G1,G2),(G2,G1) \\ 0 & (i,j) \neq (G1,G2),(G1,G2) \end{cases}$$

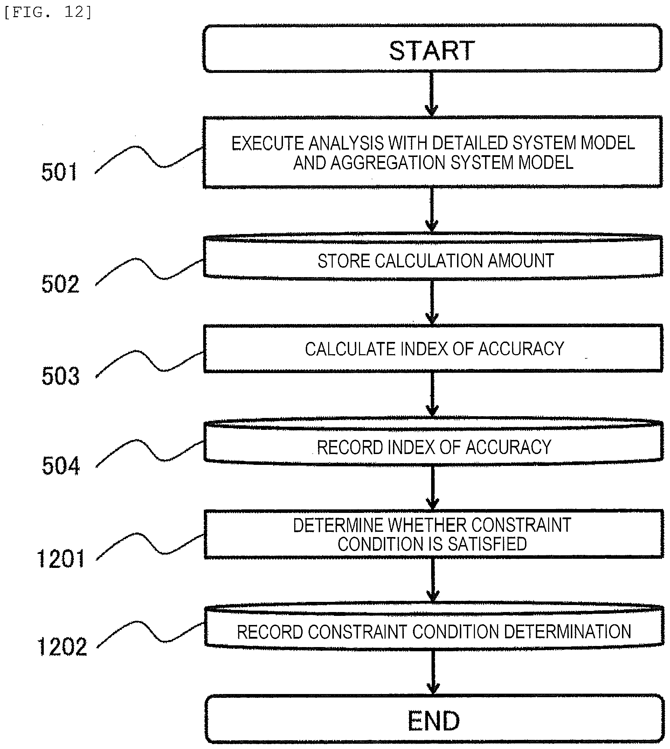

In the process 203 of Fig. 12, in the second embodiment, the aggregation fitness F(i, j) of the two generators i and j is calculated by Equation 16 using the fitness evaluation functions f4(i, j), f5(i, j), f6(i), and f7(i, j) and the parameters w4, w5, w6, and w7.

[Equation 16]

$$F(i,j,W) = w4f4(i,j)\left(1 - e^{w5f5(i,j)}\right) + w6\left(f6(i) + f6(j)\right) + w7f7(i,j)$$

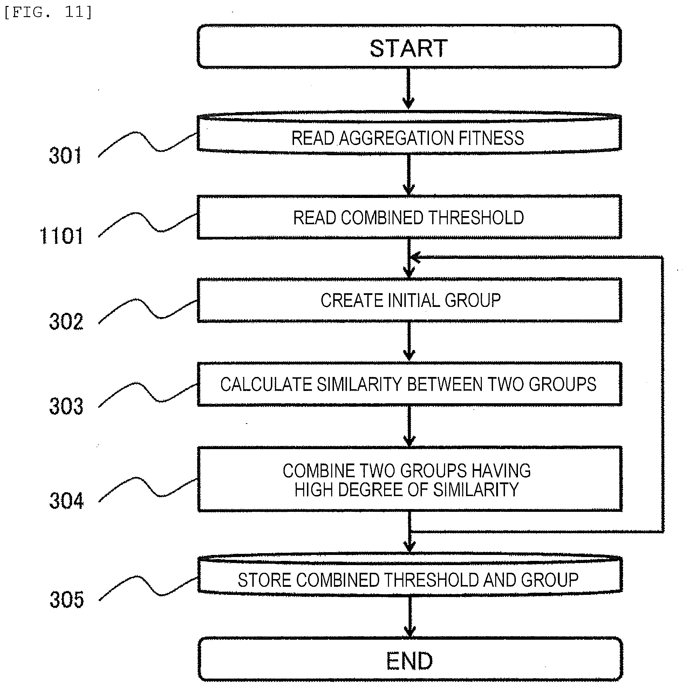

Details of the process of the group creation 905 will be described with reference to the flowchart of Fig. 11. The processes 301, 302, 303, 304, and 305 are the same as processes 301, 302, 303, 304, and 305 in Fig. 3, and description thereof will be omitted. In a process 1101, the combined threshold sent by the combined threshold change 908 is reset.

Details of the process of the model evaluation 906 will be described with reference to the flowchart of Fig. 12. The processes 501, 502, 503, and 504 are the same as the processes 501, 502, 503, and 504 in Fig. 5, and a detailed description will be omitted. In a process 1201, it is determined whether the created aggregation system model data 105 satisfies the constraint condition 911. In a process 1202, the determination result of the process 1201 is recorded.

In the second embodiment, the analysis accuracy of the aggregation system model data 105 is compared with the eigenvalues of the power system. The fluctuation of the power system is expressed by the sum of the damped vibrations of a single frequency, and the vibration components thereof are expressed by the eigenvalues of an A matrix of Equation 11 obtained by linearizing the differential equations of the power system model. Therefore, the closer the eigenvalues of the detailed system model data 104 and the aggregation system model data 105, the higher the accuracy of analysis of the aggregation system model. In the process 501, eigenvalues of the detailed system model and the aggregation system model are calculated. In the second embodiment, the calculation amount is taken as the number of differential equations of the buses of the system model, and in the process 502, the number of differential equations (the order of A in Equation 11) of the detailed system model and the aggregation system model is counted and stored. In the process 503, the close eigenvalues of the detailed system model and the aggregation system model are compared, the error thereof is calculated, and in the process 504, the difference is recorded.

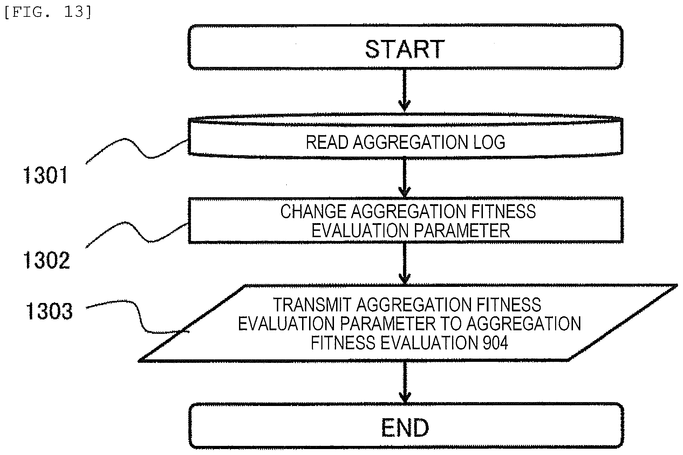

Details of the process of the aggregation fitness evaluation parameter change 907 will be described with reference to Fig. 13. In this process, the parameter set W to be used in the aggregation fitness evaluation 904 is changed based on the aggregation log 910 and sent to the process 904. In a process 1301, from the aggregation log 910, the analysis accuracy and calculation amount of the aggregation system model data 105, the set W of parameters used in the aggregation fitness evaluation 904, and the determination as to whether the constraint condition is satisfied are read. In a process 1302, the aggregation fitness evaluation parameter W is changed. For example, there is a method of changing each parameter w1, w2, ... in a fixed step. In addition, there are also a method of obtaining the analysis accuracy and the sensitivity of the calculation amount of the aggregation system model with respect to the change value of a set of parameters by using the aggregation log to change the parameters of the maximum sensitivity and a method of creating a plurality of pieces of aggregation model data 105 and an aggregation log thereof to change the set of aggregation fitness evaluation parameters by machine learning. In a process 1303, the set W of changed aggregation fitness evaluation parameters is sent to the aggregation fitness evaluation 904.

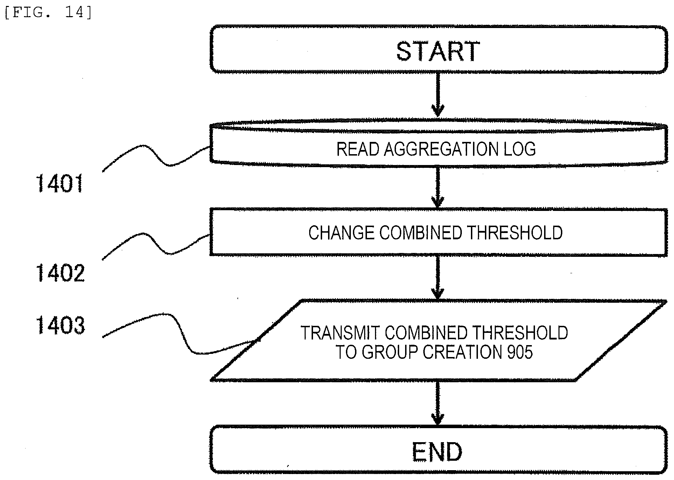

Details of the process of the combined threshold change 908 will be described with reference to Fig. 14. In this process, the combined threshold to be used in the group creation 905 is changed based on the aggregation log 910 and sent to the process 905. In a process 1401, from the aggregation log 910, the analysis accuracy and the calculation amount of the aggregation system model data 105, the combined threshold used in the group creation 905, and the determination as to whether the constraint condition is satisfied are read. In a process 1402, the combined threshold is changed. As a method change, for example, there is a method of changing the combined threshold in a fixed step. In addition, there are also a method of obtaining the analysis accuracy and the sensitivity of the calculation amount of the aggregation system model with respect to the change value of the combined threshold by using the aggregation log to change the combined threshold in a variable step and a method of creating a plurality of pieces of aggregation model data 105 and an aggregation log thereof to change the combined threshold by machine learning. In a process 1403, the changed combined threshold is sent to the group creation 905.

In the power system aggregation device of Fig. 9, the aggregation fitness evaluation 904, group creation 905, the aggregation model creation 108, model evaluation 908, the aggregation log 910, the aggregation fitness evaluation parameter change 907, and the combined threshold change 908 are processed repeatedly. At least one of the model evaluation 906, the aggregation fitness evaluation parameter 907, and the combined threshold change 908 determines the termination of repetition. As a specific example, the simplest repetition termination determination process is a process of terminating the repetition when the processes are repeated a predetermined number of times. This process is performed after the process 1202 of the model evaluation 906. As another example of the repetition termination determination process, the repetition may be terminated when the aggregation model data 105 satisfies the constraint condition. In the process 1202 of the model evaluation 908 or afterwards, determination processing is performed. As another example of the repetition termination determination process, there is a process of terminating the repetition when the best aggregation model data is created. The change amount of the aggregation fitness evaluation parameters of the process 1302 of the aggregation fitness evaluation parameter change 907 or the change amount of the combined threshold of the process 1402 of the combined threshold change 908 is repeatedly checked, and when the change amount becomes equal to or less than a user-specified threshold, it is determined that the best aggregation model has been reached and the repetition is terminated.

Details of the process of the optimum condition selection 909 will be described. In this process, the aggregation log is examined, and the aggregation fitness evaluation parameters and the combined threshold for creating the optimum aggregation system model data 105 for the user are output. First, by reading the aggregation log 910, the aggregation fitness evaluation parameters and the combined threshold of the aggregation system models that satisfy the constraint condition, and the analysis accuracy and calculation amount of the aggregation system models are read. Next, the analysis accuracy and the calculation amount of the aggregation system models are compared, and an optimum aggregation system model is selected. This optimum condition is determined by the user. For example, the optimum condition is the case where the difference between the eigenvalues of the detailed system model and the aggregation system model is the smallest, or the calculation time is the shortest. Combinations of the aggregation fitness evaluation parameters and the combined threshold for creating an optimum aggregation system model are stored as the optimum parameters 912. For example, these optimum parameters 912 are displayed as shown in Fig. 7D.

There are other embodiments to be described below in the power system aggregation device described above. In Fig. 9, the aggregation fitness parameter change 907 and the combined threshold change 908 are two different functions, but may be a process of changing the aggregation fitness evaluation parameters and the combined threshold collectively without the combined threshold change 908. In the optimum condition selection 909, the optimum condition is not limited to one, but combinations of the aggregation fitness evaluation parameters and the combined threshold for each optimum aggregation system model may be output for plural different types of optimality. For example, there are the case where the shortest calculation time is optimum, the case where the best accuracy is optimum and the like.

According to this embodiment, the user can obtain optimum parameters for creating an aggregation system model with higher analysis accuracy and less calculation amount than the method of related art merely by defining the constraint condition 911.

Example 3

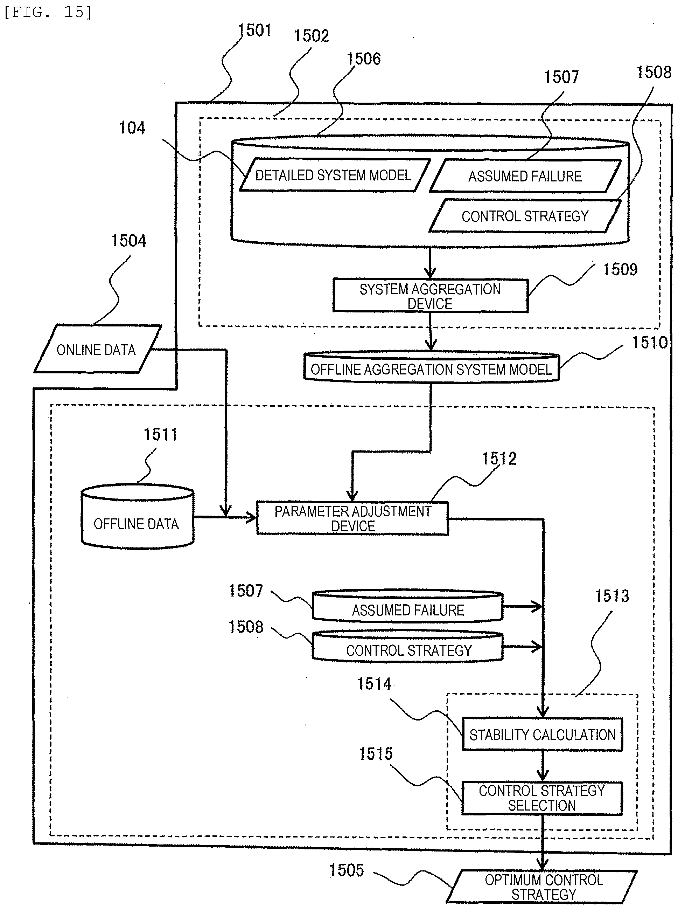

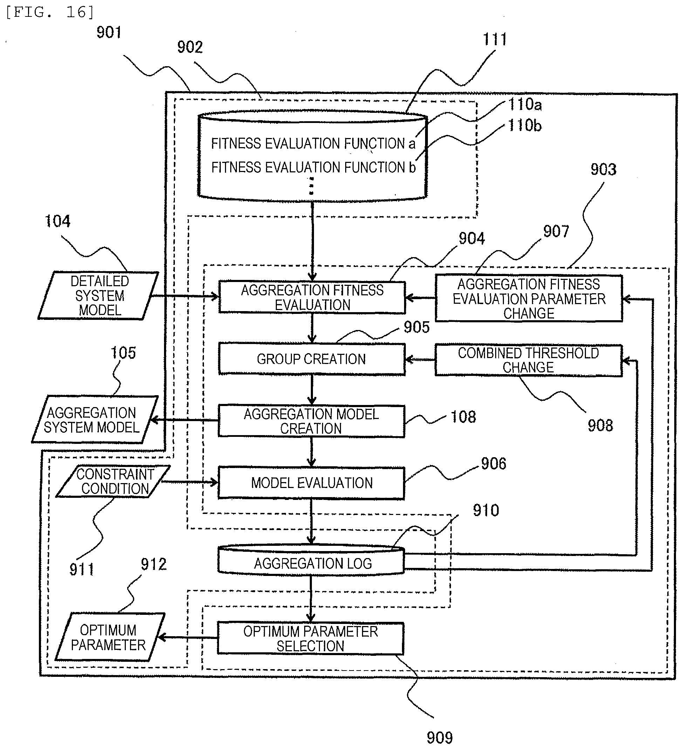

Another embodiment of the present invention will be described with reference to Figs. 15 and 16.

A third embodiment is an online pre-calculation type stabilization system including a power system aggregation device to which the present invention is applied. The online pre-calculation type stabilization system is a system that periodically acquires information on the loads and the like of the power system online, to calculate fluctuations during an assumed fault in advance and calculate an optimum control strategy. When a fault actually occurs, the calculated control is executed at high speed, thereby stabilizing the power system.

Fig. 15 is a diagram showing a functional configuration of an online pre-calculation type stabilization system including a power system aggregation device to which the present invention is applied. The online pre-calculation type stabilization system 1501 in the embodiment is configured by a pre-processing device 1502 operating offline and an online processing device 1503 operating online and outputs an optimum control strategy 1505 with online data 1504 as an input in the online operation.

The pre-processing device 1502 is configured by a storage device 1506 for storing the detailed system model data 104, assumed fault data 1507, control strategy data 1508, and a system aggregation device 1509 and outputs offline aggregation system model data 1510.

The online processing device 1503 is configured by offline data 1511, a parameter adjustment device 1512, the assumed fault data 1507, the control strategy data 1508, and an optimum control strategy determination device 1513 which is configured by stability calculation 1514 and control strategy selection 1515 and outputs the optimum control strategy 1505 with the online data 1504 and the offline aggregation system model data 1510 as inputs. Each data, details of each process, and specific examples will be described below. The detailed system model data 104 is the same as that of the power system aggregation device in the first embodiment, and description thereof will be omitted. The assumed fault data 1507 and the control strategy data 1508 are data to be used for the stability calculation performed by the system aggregation device 1509 and the optimum control strategy determination device 1513, respectively. The assumed fault data 1507 is a fault occurring in the power system, for example, a break in a transmission line in the power system model. The control strategy data 1508 is a control performed by the user in order to stabilize the power system, such as increase of the output of the generator or shutdown of a generator from the power system. In the calculation of stability, for each of these combinations, fluctuations during a fault of the power system are calculated and the stability is examined.

Details of the system aggregation device 1509 will be described with reference to Fig. 16. Fig. 16 shows the functional configuration of the system aggregation device 1509. Except the assumed fault data 1507 and the control strategy data 1508, the power system aggregation device of the third embodiment is the same as the power system aggregation device of the second embodiment, and description of the same processes and data as in Fig. 9 will be omitted. It is assumed that the aggregation system model data 105, which is an output, is the offline aggregation system model 1510. The assumed fault data 1507 and the control strategy data 1508 are used in the aggregation fitness evaluation 904 and the model evaluation 906. In the aggregation fitness evaluation 904, the fluctuations during a fault are calculated using the detailed system model data 104, and in the model evaluation 906, the fluctuations during a fault are calculated using the aggregation system model data 105. At this time, when an assumed fault of the assumed fault data 1507 occurs, the fluctuation calculation is performed under the condition that the control strategy data 1508 is controlled.

The parameter adjustment device 1512 is a device that changes the parameters of the offline aggregation system model 1510 with the online data 1504 and the offline data 1511 as inputs to create an online aggregation system model. The online data 1504 is information on the voltage, frequency, tidal current, and operation and suspension of the power system obtained from measuring instruments such as SV, TM, PMU, and the like of the power system. In addition to the equipment constants such as the connection end and reactance of the transmission line or the inertial constant of the generator, the offline data 1511 is data that is not included in the online data 1504 such as past statistical data to be used for estimating a load amount and the like.

The optimum control strategy determination device 1513 is a device that outputs the optimum control strategy 1505 by using the online aggregation system model data output from the parameter adjustment device 1512, the assumed fault data 1507, and the control strategy data 1508 and is configured by the processes of the stability calculation 1514 and the control strategy selection 1515. When a fault of the assumed fault data 1507 occurs in the power system and the control in the control strategy data 1508 is performed, the stability calculation 1514 calculates fluctuations in the power system or variations of the voltage and tidal current to calculate the stability of the system. The control strategy selection 1515 selects an optimum control strategy from the control strategy 1508 based on the calculation result of the stability calculation 1514 and outputs the optimum control strategy as the optimum control strategy 1505.

The above is the configuration of the online system stabilization system according to the embodiment. According to this embodiment, since the system aggregation device 1509 outputs an offline aggregation model with higher accuracy or less calculation amount than before, the pre-calculation device 1514 can output a more accurate optimal control strategy than before or shorten the processing time. By the accurate control, it is possible to enhance the stability of the system or reduce the control margin by considering a control error. By shortening the processing time, it is possible to respond to high-speed variations such as the loads of the system, and it is possible to enhance the stability of the power system or to reduce the margin of the control amount by considering time variation or to reduce calculation facilities.

The present invention is not limited to the above embodiments, but may be changed to various other forms within the scope of the appended claims. Further, the control line and the information line indicate what is considered to be necessary for the description, and not necessarily all the control lines and the information lines are shown.

Reference Signs List

| | |
|---|---|
| 101: | power system aggregation device |
| 102: | storage device |
| 103: | processing device |
| 104: | detailed system model |
| 105: | aggregation system model |
| 106: | aggregation fitness evaluation |
| 107: | group creation |
| 108: | aggregation system model creation |
| 109: | model evaluation |
| 110: | fitness evaluation function |
| 111: | fitness table function library |
| 112: | aggregation log |
| 903: | aggregation fitness evaluation parameter change |
| 908: | combined threshold change |
| 909: | optimum parameter selection |
| 911: | constraint condition |
| 911: | optimum parameter |
| 1501: | power system stabilization device |
| 1504: | online data |
| 1505: | optimum control strategy |
| 1507: | assumed fault |
| 1508: | control strategy |
| 1510: | offline aggregation system model |
| 1511: | offline data |
| 1512: | parameter adjustment device |
| 1513: | optimum control determination device |
| 1514: | stability calculation |
| 1515: | control strategy selection |

Claims

1.  A power system aggregation device (101) comprising:

a fitness evaluation function library (111) configured to store two or more aggregation fitness evaluation functions (110a, 110b); and
a processing unit (103) configured to obtain an aggregation fitness from a detailed system model (104) by using the aggregation fitness evaluation functions (110a, 110b) to create by a group creation (107) an aggregation group from the aggregation fitness, and to create an aggregation system model (105) from the aggregation group, wherein the processing unit (103) is configured to calculate the aggregation fitness of two or more power system model constituent elements by using two or more fitness evaluation functions (110a, 110b) and to create the aggregation group on the basis of the aggregation fitness of the power system model constituent elements, wherein the processing unit (103) is configured to perform model evaluation (109) for evaluating at least one of analysis accuracy and a calculation amount of the aggregation system model (105), and wherein the power system aggregation device (101) further comprises an aggregation log (112) configured to store at least one of the model evaluation (109), the fitness evaluation functions (110a, 110b), the aggregation fitness, aggregation fitness evaluation parameters, the aggregation group, and a combined threshold of the aggregation group,

**characterized in that** the group creation (107) is configured to create an aggregation group consisting of a combination of elements of the power system model (104) according to the obtained aggregation fitness and, as a process thereof, to calculate a similarity of two groups and to combine two groups whose similarity exceeds a threshold and is a maximum.

2.  The power system aggregation device (101) according to claim 1,
    wherein the power system model constituent elements for calculating the aggregation fitness include at least one of a generator (803), a bus, a load, or a power converter of the power system model (104).

3.  The power system aggregation device (101) according to claim 1,
    wherein the power system aggregation device (101) is configured to read two or more fitness evaluation functions (110a, 110b) from the fitness evaluation function library (111) and to calculate an aggregation fitness of a combination of the constituent elements of the power system model (104) by using the fitness evaluation functions (110a, 110b) read and aggregation fitness evaluation parameters.

4.  The power system aggregation device (101) according to claim 3,
    wherein the power system aggregation device (101) is configured to obtain the aggregation fitness by weighting the output of the fitness evaluation functions (110a, 110b) by weight parameters and set the weighting parameters as the aggregation fitness evaluation parameters.

5.  The power system aggregation device (101) according to claim 1,
    wherein the power system aggregation device (101) is configured to select two or more of a generator (803), a bus, a load, or a power converter of the power system model (104) as a combination of constituent elements of the power system model (104) for which an aggregation fitness is calculated.

6.  The power system aggregation device (101) according to claim 1,
    wherein the similarity of the two groups is set to be a minimum aggregation fitness of the combination of elements included in each group.

7.  The power system aggregation device (101) according to claim 1,
    wherein the power system aggregation device (101) is configured to perform:

    model evaluation (906) for determining whether the aggregation system model (105) satisfies a constraint condition (911);
    aggregation fitness evaluation parameter change (907) for changing the aggregation fitness evaluation parameters of the aggregation fitness evaluation (904) according to the aggregation log (112);
    aggregation fitness evaluation (904) for reading the aggregation fitness evaluation parameters and calculating an aggregation fitness; and
    parameter selection for outputting a condition of the aggregation system model (105) with the aggregation log (112) and objective functions of a plurality of aggregation system models (105).

8.  The power system aggregation device (101) according to claim 1,
    wherein the power system aggregation device (101) is configured to perform: model evaluation (906) for determining whether the aggregation system model (105) satisfies a constraint condition (911); combined threshold change (908) for changing the combined threshold of the group creation (107) according to the aggregation log (112); group creation (107) for reading the combined threshold to create the aggregation group; and parameter selection for outputting a condition of the aggregation system model (105) with the aggregation log (112) and objective functions of a plurality of aggregation system models (105).

9.  The power system aggregation device (101) according to claim 1,
    wherein the power system aggregation device (101) is configured to perform: model evaluation (906) for determining whether the aggregation system model (105) satisfies a constraint condition (911);
    aggregation fitness evaluation parameter change (907) for changing the aggregation fitness evaluation parameters of the aggregation fitness evaluation (904) according to the aggregation log (112);
    aggregation fitness evaluation (904) for reading the aggregation fitness evaluation parameters and calculating the aggregation fitness;
    combined threshold change (908) for changing the combined threshold of the group creation (107) according to the aggregation log (112);
group creation (905) for reading the combined threshold to create the group; and
parameter selection for outputting a condition of the aggregation system model (105) with the aggregation log (112) and objective functions of a plurality of aggregation system models (105).

10. The power system aggregation device (101) according to claim 1, further comprising:
a display unit configured to display an aggregation log (112).

11. A power system stabilization device (1501) comprising:

the power system aggregation device (101) according to claim 1;
a parameter adjustment device (1512) that is configured to create an online aggregation system model from online data (1504), offline data (1511), and an offline aggregation system model (1510) and to send the online aggregation system model tc a control setting device; and
a control setting device that is configured to create a control strategy from an assumed fault (1507), a control strategy (1508), and the online aggregation system model by stability calculation and selection of the control strategy (1508).

12. A power system aggregation method, comprising:

obtaining an aggregation fitness of two or more power system model constituent elements from two or more aggregation fitness evaluation functions (110a, 110b) on the basis of a fitness evaluation function library (111) in which two or more aggregation fitness evaluation functions (110a, 110b) are stored, and a detailed system model (104);
creating an aggregation group from the aggregation fitness;
creating an aggregation system model (105) from the aggregation group; and
calculating the aggregation fitness of two or more power system model constituent elements by using two or more fitness evaluation functions (110a, 110b)
and creating the aggregation group on the basis of the aggregation fitness of the power system model constituent elements,
evaluating at least one of analysis accuracy and a calculation amount of the aggregation system model (105),
storing at least one of the model evaluation (109), the fitness evaluation functions (110a, 110b), the aggregation fitness, aggregation fitness evaluation parameters, the aggregation group, and a combined threshold of the aggregation group in an aggregation log (112),
**characterized by** creating an aggregation group consisting of a combination of elements of the power system model (104) according to the obtained aggregation fitness, and, as a process thereof, calculating a similarity of two groups and combining two groups whose similarity exceeds a threshold and is a maximum.

**Patentansprüche**

1. Stromversorgungssystem-Aggregationsvorrichtung (101), die Folgendes umfasst:

eine Tauglichkeitsevaluationsfunktionsbibliothek (111), die konfiguriert ist, zwei oder mehr Aggregationstauglichkeits-Evaluationsfunktionen (110a, 110b) zu speichern; und
eine Verarbeitungseinheit (103), die konfiguriert ist, eine Aggregationstauglichkeit aus einem detaillierten Systemmodell (104) zu erhalten, indem die Aggregationstauglichkeits-Evaluationsfunktionen (110a, 110b) verwendet werden, um durch eine Gruppenbildung (107) eine Aggregationsgruppe aus der Aggregationstauglichkeit zu bilden und um ein Aggregationssystemmodell (105) aus der Aggregationsgruppe zu bilden, wobei die Verarbeitungseinheit (103) konfiguriert ist, die Aggregationstauglichkeit von zwei oder mehr Elementen, die das Stromversorgungssystemmodell bilden, durch Verwendung von zwei oder mehr Tauglichkeits-Evaluationsfunktionen (110a, 110b) zu berechnen und die Aggregationsgruppe auf der Basis der Aggregationstauglichkeit der Elemente, die das Stromversorgungssystemmodell bilden, zu bilden, wobei die Verarbeitungseinheit (103) konfiguriert ist, eine Modellevaluation (109) zum Evaluieren einer Analysegenauigkeit und/oder eines Berechnungsumfangs des Aggregationssystemmodells (105) durchzuführen,
und wobei die Stromversorgungssystem-Aggregationsvorrichtung (101) ferner ein Aggregationsprotokoll (112) umfasst, das konfiguriert ist, die Modellevaluation (109), die Tauglichkeits-Evaluationsfunktionen (110a, 110b), die Aggregationstauglichkeit, Aggregationstauglichkeits-Evaluationsparameter, die Aggregationsgruppe und/oder einen kombinierten Schwellenwert der Aggregationsgruppe zu speichern,
**dadurch gekennzeichnet, dass** die Gruppenbildung (107) konfiguriert ist, eine Aggregationsgruppe zu bilden, die aus einer Kombination von Elementen des Stromversorgungssystemmodells (104) entsprechend der erhaltenen Aggregationstauglichkeit besteht, und als ein Vorgang dabei eine Ähnlichkeit von zwei Gruppen zu berechnen und zwei Gruppen zu kombinieren, deren Ähnlichkeit einen Schwellenwert überschreitet und ein Maximum ist.

2. Stromversorgungssystem-Aggregationsvorrichtung (101) nach Anspruch 1, wobei die Elemente, die das Stromversorgungssystemmodell für eine Berechnung der Aggregationstauglichkeit bilden, einen Generator (803), einen Bus, eine Last und/oder einen Leistungsumsetzer des Stromversorgungssystemmodells (104) umfassen.

3. Stromversorgungssystem-Aggregationsvorrichtung (101) nach Anspruch 1, wobei die Stromversorgungssystem-Aggregationsvorrichtung (101) konfiguriert ist, zwei oder mehr Tauglichkeits-Evaluationsfunktionen (110a, 110b) aus der Tauglichkeitsevaluationsfunktionsbibliothek (111) auszulesen und eine Aggregationstauglichkeit einer Kombination der Bestandteile des Stromversorgungssystemmodells (104) unter Verwendung der ausgelesenen Tauglichkeits-Evaluationsfunktionen (110a, 110b) und der Aggregationstauglichkeits-Evaluationsparameter zu berechnen.

4. Stromversorgungssystem-Aggregationsvorrichtung (101) nach Anspruch 3, wobei die Stromversorgungssystem-Aggregationsvorrichtung (101) konfiguriert ist, die Aggregationstauglichkeit durch Gewichten der Ausgabewerte der Tauglichkeits-Evaluationsfunktionen (110a, 110b) mit Gewichtungsparametern zu erhalten und die Gewichtungsparameter als die Aggregationstauglichkeits-Evaluationsparameter festzulegen.

5. Stromversorgungssystem-Aggregationsvorrichtung (101) nach Anspruch 1, wobei die Stromversorgungssystem-Aggregationsvorrichtung (101) konfiguriert ist, zwei oder mehr Elemente aus einem Generator (803), einem Bus, einer Last und einem Leistungsumsetzer des Stromversorgungssystemmodells (104) als eine Kombination von Bestandteilen des Stromversorgungssystemmodells (104) auszuwählen, für das eine Aggregationstauglichkeit berechnet wird.

6. Stromversorgungssystem-Aggregationsvorrichtung (101) nach Anspruch 1, wobei die Ähnlichkeit der zwei Gruppen so eingestellt ist, dass sie eine minimale Aggregationstauglichkeit der Kombination von Elementen ist, die in jeder Gruppe enthalten sind.

7. Stromversorgungssystem-Aggregationsvorrichtung (101) nach Anspruch 1, wobei die Stromversorgungssystem-Aggregationsvorrichtung (101) konfiguriert ist, die folgenden Schritte auszuführen:

   eine Modellevaluation (906), um festzustellen, ob das Aggregationssystemmodell (105) eine Einschränkungsbedingung (911) erfüllt;
   eine Aggregationstauglichkeits-Evaluationsparameteränderung (907) zum Ändern der Aggregationstauglichkeits-Evaluationsparameter der Aggregationstauglichkeitsevaluation (904) entsprechend dem Aggregationsprotokoll (112);
   eine Aggregationstauglichkeitsevaluation (904) zum Auslesen der Aggregationstauglichkeits-Evaluationsparameter und zum Berechnen einer Aggregationstauglichkeit; und
   eine Parameterauswahl zum Ausgeben einer Bedingung des Aggregationssystemmodells (105) mit dem Aggregationsprotokoll (112) und von Zielfunktionen von mehreren Aggregationssystemmodellen (105).

8. Stromversorgungssystem-Aggregationsvorrichtung (101) nach Anspruch 1, wobei die Stromversorgungsystem-Aggregationsvorrichtung (101) konfiguriert ist, die folgenden Schritte auszuführen:

   eine Modellevaluation (906), um festzustellen, ob das Aggregationssystemmodell (105) eine Einschränkungsbedingung (911) erfüllt;
   eine kombinierte Schwellenwertänderung (908) zum Ändern des kombinierten Schwellenwerts der Gruppenbildung (107) entsprechend dem Aggregationsprotokoll (112);
   eine Gruppenbildung (107) zum Auslesen des kombinierten Schwellenwerts, um die Aggregationsgruppe zu bilden; und
   eine Parameterauswahl zum Ausgeben einer Bedingung des Aggregationssystemmodells (105) mit dem Aggregationsprotokoll (112) und von Zielfunktionen von mehreren Aggregationssystemmodellen (105).

9. Stromversorgungssystem-Aggregationsvorrichtung (101) nach Anspruch 1,
wobei die Stromversorgungssystem-Aggregationsvorrichtung (101) konfiguriert ist, die folgenden Schritte auszuführen:

eine Modellevaluation (906), um festzustellen, ob das Aggregationssystemmodell (105) eine Einschränkungsbedingung (911) erfüllt;
eine Änderung des Aggregationstauglichkeits-Evaluationsparameters (907), um die Aggregationstauglichkeits-Evaluationsparameter der Aggregationstauglichkeitsevaluation (904) entsprechend dem Aggregationsprotokoll (112) zu ändern;
eine Aggregationstauglichkeitsevaluation (904) zum Auslesen der Aggregationstauglichkeits-Evaluationsparameter und zum Berechnen der Aggregationstauglichkeit;
eine kombinierte Schwellenwertänderung (908) zum Ändern des kombinierten Schwellenwerts der Gruppenbildung (107) entsprechend dem Aggregationsprotokoll (112);
eine Gruppenbildung (905) zum Auslesen des kombinierten Schwellenwerts, um die Gruppe zu bilden; und
eine Parameterauswahl zum Ausgeben einer Bedingung des Aggregationssystemmodells (105) mit dem Aggregationsprotokoll (112) und von Zielfunktionen von mehreren Aggregationssystemmodellen (105).

10. Stromversorgungssystem-Aggregationsvorrichtung (101) nach Anspruch 1, die ferner Folgendes umfasst:
eine Anzeigeeinheit, die konfiguriert ist, ein Aggregationsprotokoll (112) anzuzeigen.

11. Stromversorgungssystem-Stabilisierungsvorrichtung (1501), die Folgendes umfasst:

die Stromversorgungssystem-Aggregationsvorrichtung (101) nach Anspruch 1;
eine Parametereinstellvorrichtung (1512), die konfiguriert ist, ein Online-Aggregationssystemmodell aus Online-Daten (1504), Offline-Daten (1511) und einem Offline-Aggregationssystemmodell (1510) zu bilden und das Online-Aggregationssystemmodell zu einer Steuerungseinstellvorrichtung zu senden; und
eine Steuerungseinstellvorrichtung, die konfiguriert ist, eine Steuerungsstrategie aus einer angenommenen Störung (1507), einer Steuerungsstrategie (1508) und dem Online-Aggregationssystemmodell durch eine Stabilitätsberechnung und durch eine Auswahl der Steuerungsstrategie (1508) zu bilden.

12. Stromversorgungssystem-Aggregationsverfahren, das die folgenden Schritte umfasst:

Erhalten einer Aggregationstauglichkeit von zwei oder mehr Elementen, die das Stromversorgungssystemmodell bilden, aus zwei oder mehr Aggregationstauglichkeits-Evaluationsfunktionen (110a, 110b) auf der Basis einer Tauglichkeitsevaluationsfunktionsbibliothek (111), in der zwei oder mehr Aggregationstauglichkeits-Evaluationsfunktionen (110a, 110b) gespeichert sind, und eines detaillierten Systemmodells (104);
Bilden einer Aggregationsgruppe aus der Aggregationstauglichkeit;
Bilden eines Aggregationssystemmodells (105) aus der Aggregationsgruppe; und
Berechnen der Aggregationstauglichkeit aus zwei oder mehr Elementen, die das Stromversorgungssystemmodell bilden, unter Verwendung von zwei oder mehr Tauglichkeitsevaluationsfunktionen (110a, 110b) und Bilden der Aggregationsgruppe auf der Basis der Aggregationstauglichkeit der Elemente, die das Stromversorgungssystemmodell bilden,
Evaluieren einer Analysegenauigkeit und/oder eines Berechnungsumfangs des Aggregationssystemmodells (105),
Speichern der Modellevaluation (109), der Tauglichkeitsevaluationsfunktionen (110a, 110b), der Aggregationstauglichkeit, der Aggregationstauglichkeits-Evaluationsparameter, der Aggregationsgruppe und/oder eines kombinierten Schwellenwerts der Aggregationsgruppe in einem Aggregationsprotokoll (112),
**gekennzeichnet durch** die Bildung einer Aggregationsgruppe, die aus einer Kombination von Elementen des Stromversorgungssystemmodells (104) entsprechend der erhaltenen Aggregationstauglichkeit besteht, und als ein Vorgang dabei die Berechnung einer Ähnlichkeit von zwei Gruppen und das Kombinieren von zwei Gruppen, deren Ähnlichkeit einen Schwellenwert überschreitet und ein Maximum ist.

**Revendications**

1. Dispositif d'agrégation de système électrique (101) comprenant :

une bibliothèque de fonctions d'évaluation d'aptitude (111) configurée pour stocker deux ou plusieurs fonctions d'évaluation d'aptitude à l'agrégation (110a, 110b); et

une unité de traitement (103) configurée pour obtenir une aptitude à l'agrégation à partir d'un modèle de système détaillé (104) en utilisant les fonctions d'évaluation d'aptitude à l'agrégation (110a, 110b) pour créer, par une création de groupe (107), un groupe d'agrégation à partir de l'aptitude à l'agrégation, et pour créer un modèle de système d'agrégation (105) à partir du groupe d'agrégation,

dans lequel l'unité de traitement (103) est configurée pour calculer l'aptitude à l'agrégation de deux ou plusieurs éléments constitutifs du modèle de système électrique en utilisant deux ou plusieurs fonctions d'évaluation d'aptitude (110a, 110b) et pour créer le groupe d'agrégation sur la base de l'aptitude à l'agrégation des éléments constitutifs du modèle de système électrique,

dans lequel l'unité de traitement (103) est configurée pour effectuer une évaluation de modèle (109) pour évaluer au moins un élément parmi une précision d'analyse et une quantité de calcul du modèle de système d'agrégation (105),

et dans lequel le dispositif d'agrégation de système électrique (101) comprend en outre un journal d'agrégation (112) configuré pour stocker au moins un élément parmi l'évaluation de modèle (109), les fonctions d'évaluation d'aptitude (110a, 110b), l'aptitude à l'agrégation, des paramètres d'évaluation d'aptitude à l'agrégation, le groupe d'agrégation, et un seuil combiné du groupe d'agrégation,

**caractérisé en ce que**

la création de groupe (107) est configurée pour créer un groupe d'agrégation constitué d'une combinaison d'éléments du modèle de système électrique (104) en fonction de l'aptitude à l'agrégation obtenue et, à la suite de cela, pour calculer une similarité de deux groupes et pour combiner deux groupes dont la similarité dépasse un seuil et est un maximum.

2. Dispositif d'agrégation de système électrique (101) selon la revendication 1,
dans lequel les éléments constitutifs du modèle de système électrique pour le calcul de l'aptitude à l'agrégation incluent au moins un élément parmi un générateur (803), un bus, une charge ou un convertisseur de puissance du modèle de système électrique (104).

3. Dispositif d'agrégation de système électrique selon la revendication 1,
dans lequel le dispositif d'agrégation de système électrique (101) est configuré pour lire deux ou plusieurs fonctions d'évaluation d'aptitude (110a, 110b) dans la bibliothèque de fonctions d'évaluation d'aptitude (111) et pour calculer une aptitude à l'agrégation d'une combinaison des éléments constitutifs du modèle de système électrique (104) en utilisant les fonctions d'évaluation d'aptitude (110a, 110b) lues et des paramètres d'évaluation d'aptitude à l'agrégation.

4. Dispositif d'agrégation de système électrique (101) selon la revendication 3,
dans lequel le dispositif d'agrégation de système électrique (101) est configuré pour obtenir l'aptitude à l'agrégation en pondérant la sortie des fonctions d'évaluation d'aptitude (110a, 110b) par des paramètres de poids et pour définir les paramètres de pondération comme paramètres d'évaluation d'aptitude à l'agrégation.

5. Dispositif d'agrégation de système électrique (101) selon la revendication 1,
dans lequel le dispositif d'agrégation de système électrique (101) est configuré pour sélectionner deux ou plusieurs éléments parmi un générateur (803), un bus, une charge ou un convertisseur de puissance du modèle de système électrique (104) comme une combinaison d'éléments constitutifs du modèle de système électrique (104) pour laquelle une aptitude à l'agrégation est calculée.

6. Dispositif d'agrégation de système électrique (101) selon la revendication 1,
dans lequel la similarité des deux groupes est définie comme étant une aptitude à l'agrégation minimale de la combinaison des éléments inclus dans chaque groupe.

7. Dispositif d'agrégation de système électrique (101) selon la revendication 1,
dans lequel le dispositif d'agrégation de système électrique (101) est configuré pour effectuer :

une évaluation de modèle (906) pour déterminer si le modèle de système d'agrégation (105) satisfait à une condition de contrainte (911) ;

un changement de paramètres d'évaluation d'aptitude à l'agrégation (907) pour changer les paramètres d'évaluation d'aptitude à l'agrégation de l'évaluation d'aptitude à l'agrégation (904) en fonction du journal d'agrégation (112) ;

une évaluation d'aptitude à l'agrégation (904) pour lire les paramètres d'évaluation d'aptitude à l'agrégation et calculer une aptitude à l'agrégation ; et
une sélection de paramètres pour sortir une condition du modèle de système d'agrégation (105) avec le journal d'agrégation (112) et des fonctions objectif d'une pluralité de modèles de système d'agrégation (105).

8. Dispositif d'agrégation de système électrique (101) selon la revendication 1, dans lequel le dispositif d'agrégation de système électrique (101) est configuré pour effectuer :

une évaluation de modèle (906) pour déterminer si le modèle de système d'agrégation (105) satisfait à une condition de contrainte (911) ;
un changement de seuil combiné (908) pour changer le seuil combiné de la création de groupe (107) en fonction du journal d'agrégation (112) ;
une création de groupe (107) pour lire le seuil combiné afin de créer le groupe d'agrégation ; et
une sélection de paramètres pour sortir une condition du modèle de système d'agrégation (105) avec le journal d'agrégation (112) et des fonctions objectif d'une pluralité de modèles de système d'agrégation (105).

9. Dispositif d'agrégation de système électrique (101) selon la revendication 1, dans lequel le dispositif d'agrégation de système électrique (101) est configuré pour effectuer :

une évaluation de modèle (906) pour déterminer si le modèle de système d'agrégation (105) satisfait à une condition de contrainte (911) ;
un changement de paramètres d'évaluation d'aptitude à l'agrégation (907) pour changer les paramètres d'évaluation d'aptitude à l'agrégation de l'évaluation d'aptitude à l'agrégation (904) en fonction du journal d'agrégation (112) ;
une évaluation d'aptitude à l'agrégation (904) pour lire les paramètres d'évaluation d'aptitude à l'agrégation et calculer l'aptitude à l'agrégation ;
un changement de seuil combiné (908) pour changer le seuil combiné de la création de groupe (107) en fonction du journal d'agrégation (112) ;
une création de groupe (905) pour lire le seuil combiné pour créer le groupe ; et
une sélection de paramètres pour sortir une condition du modèle de système d'agrégation (105) avec le journal d'agrégation (112) et des fonctions objectif d'une pluralité de modèles de système d'agrégation (105).

10. Dispositif d'agrégation de système électrique (101) selon la revendication 1, comprenant en outre : une unité d'affichage configurée pour afficher un journal d'agrégation (112).

11. Dispositif de stabilisation de système électrique (1501) comprenant :

le dispositif d'agrégation de système électrique (101) selon la revendication 1 ;
un dispositif de réglage de paramètres (1512) qui est configuré pour créer un modèle de système d'agrégation en ligne à partir de données en ligne (1504), de données hors ligne (1511) et d'un modèle de système d'agrégation hors ligne (1510), et pour envoyer le modèle de système d'agrégation en ligne à un dispositif de réglage de commande ; et
un dispositif de réglage de commande qui est configuré pour créer une stratégie de commande à partir d'un défaut supposé (1507), d'une stratégie de commande (1508) et du modèle de système d'agrégation en ligne par calcul de stabilité et sélection de la stratégie de commande (1508).

12. Procédé d'agrégation de système électrique, comprenant les étapes consistant à :

obtenir une aptitude à l'agrégation de deux ou plusieurs éléments constitutifs du modèle de système électrique à partir de deux ou plusieurs fonctions d'évaluation d'aptitude à l'agrégation (110a, 110b) sur la base d'une bibliothèque de fonctions d'évaluation d'aptitude (111), dans laquelle deux ou plusieurs fonctions d'évaluation d'aptitude à l'agrégation (110a, 110b) sont stockées, et d'un modèle de système détaillé (104) ;
créer un groupe d'agrégation à partir de l'aptitude à l'agrégation ;
créer un modèle de système d'agrégation (105) à partir du groupe d'agrégation ; et
calculer l'aptitude à l'agrégation de deux ou plusieurs éléments constitutifs du modèle de système électrique en utilisant deux ou plusieurs fonctions d'évaluation d'aptitude (110a, 110b) et créer le groupe d'agrégation sur la base de l'aptitude à l'agrégation des éléments constitutifs du modèle de système électrique,
évaluer au moins un élément parmi une précision d'analyse et une quantité de calcul du modèle de système d'agrégation (105),

stocker au moins un élément parmi l'évaluation de modèle (109), les fonctions d'évaluation d'aptitude (110a, 110b), l'aptitude à l'agrégation, des paramètres d'évaluation d'aptitude à l'agrégation, le groupe d'agrégation et un seuil combiné du groupe d'agrégation dans un journal d'agrégation (112),

**caractérisé par** les étapes consistant à :

créer un groupe d'agrégation constitué d'une combinaison d'éléments du modèle de système électrique (104) en fonction de l'aptitude à l'agrégation obtenue et, à la suite de cela, calculer une similarité de deux groupes et combiner deux groupes dont la similarité dépasse un seuil et est un maximum.

[FIG. 1]

[FIG. 2]

```
                    ┌─────────────────────────────────┐
                    │             START               │
                    └─────────────────────────────────┘
                                    │
                                    ▼
                    ┌─────────────────────────────────┐
      201           │  READ k-TH EVALUATION FUNCTION fk │
                    └─────────────────────────────────┘
                                    │
                                    ▼
                    ┌─────────────────────────────────┐
      202           │       CALCULATE VALUE OF fk      │
                    │     FOR GENERATORS i AND j       │
                    └─────────────────────────────────┘
                                    │
                                    ▼
                    ┌─────────────────────────────────┐
      203           │   CALCULATE AGGREGATION FITNESS  │
                    │        OF i AND j USING fk       │
                    └─────────────────────────────────┘
                                    │
                                    ▼
                    ┌─────────────────────────────────┐
                    │              END                │
                    └─────────────────────────────────┘
```

[FIG. 3]

```
                    ┌─────────────────────────────────┐
                    │             START               │
                    └─────────────────────────────────┘
                                    │
                                    ▼
         ╭─────────────────────────────────────────────────╮
   301   │          READ AGGREGATION FITNESS               │
         ╰─────────────────────────────────────────────────╯
                                    │
                                    ▼
         ┌─────────────────────────────────────────────────┐
   302   │            CREATE INITIAL GROUP                 │
         └─────────────────────────────────────────────────┘
                                    │
                                    ▼◄──────────────────────┐
         ┌─────────────────────────────────────────────────┐│
   303   │      CALCULATE SIMILARITY BETWEEN TWO GROUPS    ││
         └─────────────────────────────────────────────────┘│
                                    │                        │
                                    ▼                        │
         ┌─────────────────────────────────────────────────┐│
   304   │   COMBINE TWO GROUPS HAVING HIGH DEGREE         ││
         │              OF SIMILARITY                      ││
         └─────────────────────────────────────────────────┘│
                                    │───────────────────────┘
                                    ▼
         ╭─────────────────────────────────────────────────╮
   305   │             RECORDING OF GROUP                  │
         ╰─────────────────────────────────────────────────╯
                                    │
                                    ▼
                    ┌─────────────────────────────────┐
                    │              END                │
                    └─────────────────────────────────┘
```

[FIG. 4]

```
┌─────────────────────────────────────────┐
│                  START                   │
└─────────────────────────────────────────┘
                      │
                      ▼
┌─────────────────────────────────────────┐
│  SELECT ONE-POINT INTERCONNECTION SYSTEM │
│     HAVING ONLY ONE AGGREGATION GROUP    │
└─────────────────────────────────────────┘
                      │
                      ▼
┌─────────────────────────────────────────┐
│  REPLACE SELECTED ONE-POINT              │
│  INTERCONNECTION PARTIAL SYSTEM WITH     │
│  SIMPLIFIED MODEL BY DUAL-LOAD METHOD    │
└─────────────────────────────────────────┘
                      │
                      ▼
┌─────────────────────────────────────────┐
│                   END                    │
└─────────────────────────────────────────┘
```

401

402

[FIG. 5]

```
┌─────────────────────────────────────────────┐
│                    START                     │
└─────────────────────────────────────────────┘
                       │
                       ▼
┌─────────────────────────────────────────────┐
│  EXECUTE ANALYSIS WITH DETAILED SYSTEM MODEL │
│       AND AGGREGATION SYSTEM MODEL           │
└─────────────────────────────────────────────┘
                       │
                       ▼
┌─────────────────────────────────────────────┐
│           STORE CALCULATION AMOUNT           │
└─────────────────────────────────────────────┘
                       │
                       ▼
┌─────────────────────────────────────────────┐
│           CALCULATE INDEX OF ACCURACY        │
└─────────────────────────────────────────────┘
                       │
                       ▼
┌─────────────────────────────────────────────┐
│            STORE INDEX OF ACCURACY           │
└─────────────────────────────────────────────┘
                       │
                       ▼
┌─────────────────────────────────────────────┐
│                     END                      │
└─────────────────────────────────────────────┘
```

501

502

503

504

[FIG. 6]

A

B

[FIG. 7]

A

|  | 1 | 2 |  |  | j |
|---|---|---|---|---|---|
| 1 |  | f1(1,2) |  |  | f1(1,j) |
| 2 | f1(2,1) |  |  |  | f1(2,j) |
|  |  |  |  |  |  |
| i | f1(i,1) | f1(i,2) |  |  | f1(i,j) |
|  |  |  |  |  |  |

B

| w1 | w2 |  | wn |  |  |
|---|---|---|---|---|---|
| 0.12 | 0.08 |  |  |  |  |

C

| COMBINED THREHOLD 0.45 | GROUP 1 | GENERATOR A | GENERATOR C | GENERATOR D |  |
|---|---|---|---|---|---|
|  | GROUP 2 | GENERATOR B | GENERATOR F |  |  |
|  |  |  |  |  |  |

D

| FITNESS EVALUATION FUNCTION | WEIGHT | COMBINED THREHOLD | AGGREGATION GROUP | CALCULATION AMOUNT | ACCURACY |
|---|---|---|---|---|---|
| f1(1,2)= f1(1,3)= : : f1(n-1,n)= f2(1)= f2(2)= : : | w1=0.12 w2=0.08 : : wn= | 0.45 | group 1 gen A, gen C, gen D, ... : : group 2 gen B, gen F, : : | 154 sec | delta gen 1 max = , rms = delta gen 2 max = , rms = : : |

[FIG. 8]

A

B

[FIG. 9]

[FIG. 10]

```
┌─────────────────────────────────────┐
│                START                 │
└─────────────────────────────────────┘
                   │
                   ▼
┌─────────────────────────────────────┐
│      READ AGGREGATION FITNESS        │
1001  │      EVALUATION PARAMETER       │
└─────────────────────────────────────┘
                   │
                   ▼
╭─────────────────────────────────────╮
201   │   READ k-TH EVALUATION FUNCTION fk   │
╰─────────────────────────────────────╯
                   │
                   ▼
┌─────────────────────────────────────┐
│        CALCULATE VALUE OF fk         │
202   │     FOR GENERATORS i AND j      │
└─────────────────────────────────────┘
                   │
                   ▼
┌─────────────────────────────────────┐
│     CALCULATE AGGREGATION FITNESS    │
203   │       OF i AND j USING fk       │
└─────────────────────────────────────┘
                   │
                   ▼
┌─────────────────────────────────────┐
│                 END                  │
└─────────────────────────────────────┘
```

[FIG. 11]

```
                    ┌──────────────────────────────┐
                    │            START             │
                    └──────────────────────────────┘
                                   │
                                   ▼
        301         ┌──────────────────────────────┐
                    │    READ AGGREGATION FITNESS   │
                    └──────────────────────────────┘
                                   │
                                   ▼
        1101        ┌──────────────────────────────┐
                    │     READ COMBINED THRESHOLD   │
                    └──────────────────────────────┘
                                   │
                                   ▼
        302         ┌──────────────────────────────┐
                    │      CREATE INITIAL GROUP     │
                    └──────────────────────────────┘
                                   │
                                   ▼
        303         ┌──────────────────────────────┐
                    │ CALCULATE SIMILARITY BETWEEN  │
                    │          TWO GROUPS           │
                    └──────────────────────────────┘
                                   │
                                   ▼
        304         ┌──────────────────────────────┐
                    │    COMBINE TWO GROUPS HAVING  │
                    │    HIGH DEGREE OF SIMILARITY  │
                    └──────────────────────────────┘
                                   │
                                   ▼
        305         ┌──────────────────────────────┐
                    │ STORE COMBINED THRESHOLD AND  │
                    │            GROUP              │
                    └──────────────────────────────┘
                                   │
                                   ▼
                    ┌──────────────────────────────┐
                    │             END              │
                    └──────────────────────────────┘
```

32

[FIG. 12]

```
                    ┌─────────────────────────────────────────┐
                    │                 START                   │
                    └─────────────────────────────────────────┘
                                      │
                                      ▼
                    ┌─────────────────────────────────────────┐
        501         │  EXECUTE ANALYSIS WITH DETAILED SYSTEM   │
                    │   MODEL AND AGGREGATION SYSTEM MODEL     │
                    └─────────────────────────────────────────┘
                                      │
                                      ▼
        502         ┌─────────────────────────────────────────┐
                    │         STORE CALCULATION AMOUNT         │
                    └─────────────────────────────────────────┘
                                      │
                                      ▼
        503         ┌─────────────────────────────────────────┐
                    │       CALCULATE INDEX OF ACCURACY        │
                    └─────────────────────────────────────────┘
                                      │
                                      ▼
        504         ┌─────────────────────────────────────────┐
                    │        RECORD INDEX OF ACCURACY          │
                    └─────────────────────────────────────────┘
                                      │
                                      ▼
                    ┌─────────────────────────────────────────┐
        1201        │    DETERMINE WHETHER CONSTRAINT          │
                    │      CONDITION IS SATISFIED              │
                    └─────────────────────────────────────────┘
                                      │
                                      ▼
        1202        ┌─────────────────────────────────────────┐
                    │ RECORD CONSTRAINT CONDITION DETERMINATION│
                    └─────────────────────────────────────────┘
                                      │
                                      ▼
                    ┌─────────────────────────────────────────┐
                    │                  END                    │
                    └─────────────────────────────────────────┘
```

[FIG. 13]

```
                    ┌─────────────────────────────────┐
                    │             START               │
                    └─────────────────────────────────┘
                                    │
                                    ▼
                    ╭─────────────────────────────────╮
    1301            │        READ AGGREGATION LOG     │
                    ╰─────────────────────────────────╯
                                    │
                                    ▼
                    ┌─────────────────────────────────┐
                    │    CHANGE AGGREGATION FITNESS    │
    1302            │      EVALUATION PARAMETER        │
                    └─────────────────────────────────┘
                                    │
                                    ▼
    1303          ╱    TRANSMIT AGGREGATION FITNESS     ╱
                 ╱ EVALUATION PARAMETER TO AGGREGATION ╱
                ╱      FITNESS EVALUATION 904         ╱
                                    │
                                    ▼
                    ┌─────────────────────────────────┐
                    │              END                │
                    └─────────────────────────────────┘
```

34

[FIG. 14]

```
        START
          |
          v
1401  READ AGGREGATION LOG
          |
          v
1402  CHANGE COMBINED THRESHOLD
          |
          v
1403  TRANSMIT COMBINED THRESHOLD
      TO GROUP CREATION 905
          |
          v
         END
```

[FIG. 15]

[FIG. 16]

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H1056735 A
- JP 2004242452 A
- US 2015002568 A1
- US 2015025698 A1